(19) Europäisches Patentamt
European Patent Office
Office européen des brevets

(11) **EP 4 229 540 B1**

(12) **EUROPEAN PATENT SPECIFICATION**

(45) Date of publication and mention
of the grant of the patent:
**01.07.2026 Bulletin 2026/27**

(21) Application number: **21893351.3**

(22) Date of filing: **07.06.2021**

(51) International Patent Classification (IPC):
**G06V 10/40** *(2022.01)*

(52) Cooperative Patent Classification (CPC):
**G06V 10/25; G06N 3/0464; G06N 3/048;**
**G06N 3/08; G06N 3/0895; G06V 10/40; G06V 10/82**

(86) International application number:
**PCT/CN2021/098637**

(87) International publication number:
**WO 2022/105197 (27.05.2022 Gazette 2022/21)**

(54) **SYSTEMS AND METHODS FOR IMAGE DETECTION**

SYSTEME UND VERFAHREN ZUR BILDDETEKTION

SYSTÈMES ET PROCÉDÉS DE DÉTECTION D'IMAGE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **17.11.2020 CN 202011285823**

(43) Date of publication of application:
**23.08.2023 Bulletin 2023/34**

(73) Proprietor: **Zhejiang Dahua Technology Co., Ltd.**
**Hangzhou, Zhejiang 310053 (CN)**

(72) Inventors:
• **HU, Laifeng**
**Hangzhou, Zhejiang 310053 (CN)**
• **WU, Lifeng**
**Hangzhou, Zhejiang 310053 (CN)**

(74) Representative: **Wang, Bo**
**Panovision IP**
**Ebersberger Straße 3**
**85570 Markt Schwaben (DE)**

(56) References cited:
WO-A1-2020/192736     CN-A- 105 528 610
CN-A- 107 145 855     CN-A- 110 781 956
CN-A- 111 401 376     CN-A- 112 101 360
US-A1- 2006 029 276     US-A1- 2022 012 533

Description

## CROSS-REFERENCE TO RELATED APPLICATIONS

This application claims priority to Chinese Patent Application No. 202011285823.5 filed on November 17, 2020.

## TECHNICAL FIELD

The present disclosure generally relates to artificial intelligence technology, and in particular, to systems and methods for image detection.

## BACKGROUND

With the development of artificial intelligence technology, the application of deep learning in the field of image processing has become more and more popular. Generally, object detection of images can be achieved based on a trained machine learning model. Therefore, it is necessary to provides methods and systems for object detection with improved recognition accuracy and efficiency using machine learning models.

## SUMMARY

According to a first aspect of the present disclosure, a method for image detection implemented on a computing device may be provided. The computing device may include a processor and a storage device. The method may include inputting a detection image into a detection model and obtaining a recognition result of an object in the detection image using the detection model. In some embodiments, the obtaining a recognition result of an object in the detection image using the detection model may include extracting features of the detection image to obtain a feature vector of each of at least one pixel point; obtaining a reference feature vector corresponding to each of one or more categories stored in the storage device; determining, based on the reference feature vector and the feature vector of the pixel point, a recognition result of the pixel point; and determining, based on the recognition result of the pixel point, a recognition result of the object.

The recognition result includes a category and a position. The feature vector includes a classification feature vector and a position feature vector, and the reference feature vector includes a reference classification feature vector corresponding to the classification feature vector and a reference position feature vector corresponding to the position feature vector. The determining a recognition result of the pixel point based on the reference feature vector and the feature vector of the pixel point includes determining the category of the pixel point based on the classification feature vector of the pixel point and the reference classification feature vector corresponding to each of the one or more categories; and determining the position of the pixel point based on the position feature vector of the pixel point and the reference position feature vector corresponding to each of the one or more categories.

In some embodiments, the determining the category of the pixel point based on the classification feature vector of the pixel point and the reference classification feature vector corresponding to each of the one or more categories may include determining initial category information of the pixel point based on the classification feature vector of the pixel point; determining a similarity degree between the classification feature vector of the pixel point and the reference classification feature vector corresponding to each of the one or more categories; and determining a category of the pixel point based on the initial category information and the similarity degree.

In some embodiments, the determining the position of the pixel point based on the position feature vector of the pixel point and the reference position feature vector corresponding to each of the one or more categories may include determining an updated position feature vector of the pixel point based on the position feature vector of the pixel point and the reference position feature vector corresponding to each of the one or more categories; determining distance information of the pixel point based on the updated position feature vector of the pixel point;; determining a position of the pixel point based on the distance information. The distance information may indicate a distance between the pixel point and a bounding box of the pixel point.

In some embodiments, the reference feature vector corresponding to each of the one or more categories stored in the storage device may be obtained in a training process of the detection model, and the training process may include obtaining a plurality of sample images including a first portion and a second portion, each sample image in the first portion including one or more labels. The labels may be configured to characterize at least one of a labeled category or a labeled position of each of one or more sample objects in the each sample image in the first portion. The training process may also include, based on the plurality of sample images, updating parameter values of a preliminary detection model through multiple iterations to reduce a loss function value corresponding to each sample image.

In some embodiments, a count of sample images in the first portion may be less than a count of sample images in the second portion.

In some embodiments, the loss function value in a current iteration corresponding to a sample image may be determined by operations including: extracting features of the sample image to obtain a sample feature vector of each of at least one sample pixel point; obtaining a sample reference feature vector corresponding to each of one or more labeled categories cached in a storage unit in a current iteration; determining a predicted recognition result of the sample pixel point based on the sample reference feature vector and the sample feature vector of the sample pixel point; determining a predicted recognition result of each of the one or more sample objects based on the predicted recognition result of the sample pixel point; and determining the loss function value based on a difference between the predicted recognition result of the sample object and the labels of the sample image.

In some embodiments, the predicted recognition result may include a predicted category and a predicted position. The sample feature vector may include a sample classification feature vector and a sample position feature vector, the sample reference feature vector may include a sample reference classification feature vector corresponding to the sample classification feature vector and a sample reference position feature vector corresponding to the sample position feature vector. The determining a predicted recognition result of the pixel point based on the sample reference feature vector and the sample feature vector of the sample pixel point may include determining the predicted category of the sample pixel point based on the sample classification feature vector and the sample reference classification feature vector; and determining the predicted position of the sample pixel point based on the sample position feature vector and the sample reference position feature vector.

In some embodiments, the determining sample pixel points of different labeled categories in a sample image may include, based on sample classification feature vectors of the sample pixels, determining the sample reference classification feature vector corresponding to at least one of the one or more labeled categories in the current iteration by updating sample reference classification feature vectors corresponding to different labeled categories in a previous iteration of the current iteration; based on the sample position feature vectors of the sample pixels of different labeled categories, determining the sample reference position feature vector corresponding to at least one of the one or more labeled categories in the current iteration by updating the sample reference position feature vectors corresponding to different labeled categories in the previous iteration of the current iteration. The sample pixel points may satisfy a condition.

In some embodiments, the condition may include that a degree of overlap between a predicted position corresponding to the sample pixel point and a labeled position in the sample image is higher than a threshold.

In some embodiments, the method may include determining the sample reference classification feature vector and the sample reference position feature vector corresponding to at least one of the one or more labeled categories generated in an iteration when the training process is terminated as the reference feature vector corresponding to at least one of the one or more categories.

In some embodiments, the determining the predicted category of the sample pixel point based on the sample classification feature vector and the sample reference classification feature vector may include determining sample initial category information of the sample pixel point based on the sample classification feature vector of the sample pixel point; determining a sample similarity degree between the sample classification feature vector and the sample reference classification feature vector corresponding to each of the one or more categories; and determining the predicted category of the sample pixel point based on the sample initial category information and the sample similarity degree.

In some embodiments, the determining the predicted position of the sample pixel point based on the sample position feature vector and the sample reference position feature vector may include determining a sample updated position feature vector of the sample pixel point based on the sample position feature vector and the sample reference position feature vector corresponding to each of the one or more categories; determining distance information of the sample pixel point based on the sample updated position feature vector of the sample pixel point; the sample distance information indicating a distance between the sample pixel point and a bounding box of the sample pixel point; determining the predicted position of the sample pixel point based on the sample distance information.

According to a second aspect of the present disclosure, a system for image detection may be provided. The system may include at least one storage device including a set of instructions; and at least one processor in communication with the at least one storage device. When executing the set of instructions, the at least one processor may be directed to perform operations including: inputting a detection image into a detection model; and obtaining a recognition result of an object in the detection image using the detection model. The obtaining a recognition result of an object in the detection image using the detection model may include extracting features of the detection image to obtain a feature vector of each of at least one pixel point; obtaining a reference feature vector corresponding to each of one or more categories stored in the storage device; determining, based on the reference feature vector and the feature vector of the pixel point, a recognition result of the pixel point; and determining, based on the recognition result of the pixel point, a recognition result of the object.

In some embodiments, the recognition result includes a category and a position, the feature vector comprises a classification feature vector and a position feature vector, the reference feature vector includes a reference classification feature vector corresponding to the classification feature vector and a reference position feature vector corresponding to the position feature vector, and the determining, based on the reference feature vector and the feature vector of the pixel point, a recognition result of the pixel point includes determining the category of the pixel point based on the classification feature vector of the pixel point and the reference classification feature vector corresponding to each of the one or more categories; and determining the position of the pixel point based on the position feature vector of the pixel point and the reference position feature vector corresponding to each of the one or more categories.

In some embodiments, the determining the category of the pixel point based on the classification feature vector of the pixel point and the reference classification feature vector corresponding to each of the one or more categories may include determining initial category information of the pixel point based on the classification feature vector of the pixel point; determining a similarity degree between the classification feature vector of the pixel point and the reference classification feature vector corresponding to each of the one or more categories; and determining a category of the pixel point based on the initial category information and the similarity degree.

In some embodiments, the determining the position of the pixel point based on the position feature vector of the pixel point and the reference position feature vector corresponding to each of the one or more categories may include determining an updated position feature vector of the pixel point based on the position feature vector of the pixel point and the reference position feature vector corresponding to each of the one or more categories; determining distance information of the pixel point based on the updated position feature vector of the pixel point; the distance information indicating a distance between the pixel point and a bounding box of the pixel point; determining a position of the pixel point based on the distance information.

According to a third aspect of the present disclosure, a system for image detection may include an acquisition module configured to obtain a detection image and obtain a detection model configured to determine a recognition result of at least one object in the detection image after the detection image is inputted into the detection model; a feature extraction module configured to extract features of the detection image to obtain a feature vector of at least one pixel point in a feature image. The acquisition module may be further configured to obtain a reference feature vector corresponding to at least one category from a storage unit; and the system may also include a recognition module configured to: determine a recognition result of the at least one pixel point based on the reference feature vector and the feature vector of the at least one pixel point; determine the recognition result of at least one object in the detection image based on the recognition result of the at least one pixel point.

According to a fourth aspect of the present disclosure, a non-transitory computer readable medium may include executable instructions that, when executed by at least one processor, direct the at least one processor to perform a method. The method may include inputting a detection image into a detection model; and obtaining a recognition result of an object in the detection image using the detection model. The obtaining a recognition result of an object in the detection image using the detection model may include extracting features of the detection image to obtain a feature vector of each of at least one pixel point; obtaining a reference feature vector corresponding to each of one or more categories stored in the storage device; determining, based on the reference feature vector and the feature vector of the pixel point, a recognition result of the pixel point; and determining, based on the recognition result of the pixel point, a recognition result of the object.

According to a fifth aspect of the present disclosure, a system may include at least one storage device including a set of instructions; and at least one processor in communication with the at least one storage device. When executing the set of instructions, the at least one processor may be directed to perform operations including obtaining a plurality of sample images including a first portion and a second portion. Each sample image in the first portion may include one or more labels, and the labels may be configured to characterize at least one of a labeled category or a labeled position of each of one or more sample objects in the each sample image in the first portion. The operations may also include, based on the plurality of sample images, updating parameter values of a preliminary detection model through multiple iterations to reduce a loss function value corresponding to each sample image, in each of the multiple iterations: extracting features of the sample image to obtain a sample feature vector of each of at least one sample pixel point; obtaining a sample reference feature vector corresponding to each of one or more labeled categories cached in a storage unit in the iteration; and updating the parameter values of a preliminary detection model based on the sample feature vector and the sample reference feature vector.

In some embodiments, the updating the parameter values of a preliminary detection model based on the sample feature vector and the sample reference feature vector may include determining a predicted recognition result of the sample pixel point based on the sample reference feature vector and the sample feature vector; determining a predicted recognition result of each of the one or more sample objects based on the predicted recognition result of the sample pixel point; and determining the loss function value based on a difference between the predicted recognition result of the sample object and the labels of the sample image.

In some embodiments, the predicted recognition result may include a predicted category and a predicted position, the sample feature vector comprises a sample classification feature vector and a sample position feature vector, the sample reference feature vector may include a sample reference classification feature vector corresponding to the sample classification feature vector and a sample reference position feature vector corresponding to the sample position feature vector, the determining a predicted recognition result of the sample pixel point based on the sample reference feature vector and the sample feature vector may include determining the predicted category of the sample pixel point based on the sample classification feature vector and the sample reference classification feature vector; and determining the predicted position of the sample pixel point based on the sample position feature vector and the sample reference position feature vector.

In some embodiments, the obtaining a sample reference feature vector corresponding to each of one or more labeled categories cached in a storage unit in the current iteration may include determining sample pixel points of different labeled categories in a sample image. The sample pixel points may satisfy a condition. The obtaining a sample reference feature vector corresponding to each of one or more labeled categories cached in a storage unit in the current iteration may also include, based on sample classification feature vectors of the sample pixels, determining the sample reference classification feature vector corresponding to at least one of the one or more labeled categories in the current iteration by updating sample reference classification feature vectors corresponding to different labeled categories in a previous iteration of the current iteration; and based on the sample position feature vectors of the sample pixels of different labeled categories, determining the sample reference position feature vector corresponding to at least one of the one or more labeled categories in the current iteration by updating the sample reference position feature vectors corresponding to different labeled categories in the previous iteration of the current iteration.

In some embodiments, the condition may include that a degree of overlap between a predicted position corresponding to the sample pixel point and a labeled position in the sample image is higher than a threshold.

In some embodiments, the operations may include determining the sample reference classification feature vector and the sample reference position feature vector corresponding to at least one of the one or more labeled categories generated in an iteration when the training process is terminated as reference feature vectors corresponding to at least one of the one or more labeled categories.

In some embodiments, the determining the predicted category of the sample pixel point based on the sample classification feature vector and the sample reference classification feature vector may include determining sample initial category information of the sample pixel point based on the sample classification feature vector of the sample pixel point; determining a sample similarity degree between the sample classification feature vector and the sample reference classification feature vector corresponding to each of the one or more categories; and determining the predicted category of the sample pixel point based on the sample initial category information and the sample similarity degree.

In some embodiments, the determining the predicted position of the sample pixel point based on the sample position feature vector and the sample reference position feature vector may include determining a sample updated position feature vector of the sample pixel point based on the sample position feature vector and the sample reference position feature vector corresponding to each of the one or more categories; determining distance information of the sample pixel point based on the sample updated position feature vector of the sample pixel point; the sample distance information indicating a distance between the sample pixel point and a bounding box of the sample pixel point; determining the predicted position of the sample pixel point based on the sample distance information.

Additional features will be set forth in part in the description which follows, and in part will become apparent to those skilled in the art upon examination of the following and the accompanying drawings or may be learned by production or operation of the examples. The features of the present disclosure may be realized and attained by practice or use of various aspects of the methodologies, instrumentalities, and combinations set forth in the detailed examples discussed below.

## BRIEF DESCRIPTION OF THE DRAWINGS

The present disclosure is further described in terms of exemplary embodiments. These exemplary embodiments are described in detail with reference to the drawings. These embodiments are non-limiting exemplary embodiments, in which like reference numerals represent similar structures throughout the several views of the drawings, and wherein:

FIG. 1 is a schematic diagram illustrating an exemplary image detection system according to some embodiments of the present disclosure;
FIG. 2 is a schematic diagram illustrating exemplary hardware and/or software components of an exemplary computing device according to some embodiments of the present disclosure;
FIG. 3 is a schematic diagram illustrating exemplary hardware and/or software components of an exemplary terminal device according to some embodiments of the present disclosure;
FIG. 4A is a block diagram illustrating an exemplary processing device according to some embodiments of the present disclosure;
FIG. 4B is a block diagram illustrating an exemplary processing device according to some embodiments of the present disclosure;
FIG. 5 is a flowchart illustrating an exemplary process for object detection according to some embodiments of the present disclosure;
FIG. 6 is a schematic diagram illustrating an exemplary reference classification feature vector and an exemplary reference position feature vector according to some embodiments of the present disclosure;

FIG. 7 is a flowchart illustrating an exemplary process for determining the recognition result of a pixel point in a detection image according to some embodiments of the present disclosure;

FIG. 8 is a flowchart illustrating an exemplary process for training a detection model according to some embodiments of the present disclosure;

FIG. 9 is a flowchart illustrating an exemplary process for determining a loss function value in a current iteration of the training of a detection model according to some embodiments of the present disclosure;

FIG. 10 is a flowchart illustrating an exemplary process for determining a predicted recognition result of at least one sample pixel point according to some embodiments of the present disclosure;

FIG. 11 is a flowchart illustrating an exemplary process for obtaining a sample reference feature vector corresponding to a labeled category in a current iteration of the training of a detection model according to some embodiments of the present disclosure;

FIG. 12 is a flowchart illustrating another exemplary process for image detection according to some embodiments of the present disclosure;

FIG. 13 is a schematic diagram illustrating an exemplary bounding box cache feature and an exemplary category cache feature according to some embodiments of the present disclosure;

FIG. 14 is a flowchart illustrating another exemplary process for image detection according to some embodiments of the present disclosure;

FIG. 15 is a flowchart illustrating another exemplary process for image detection according to some embodiments of the present disclosure.

## DETAILED DESCRIPTION

In the following detailed description, numerous specific details are set forth by way of examples in order to provide a thorough understanding of the relevant disclosure. However, it should be apparent to those skilled in the art that the present disclosure may be practiced without such details. In other instances, well-known methods, procedures, systems, components, and/or circuitry have been described at a relatively high-level, without detail, in order to avoid unnecessarily obscuring aspects of the present disclosure.

It will be understood that the terms "system," "engine," "unit," "module," and/or "block" used herein are one method to distinguish different components, elements, parts, sections, or assemblies of different levels in ascending order. However, the terms may be displaced by other expression if they may achieve the same purpose.

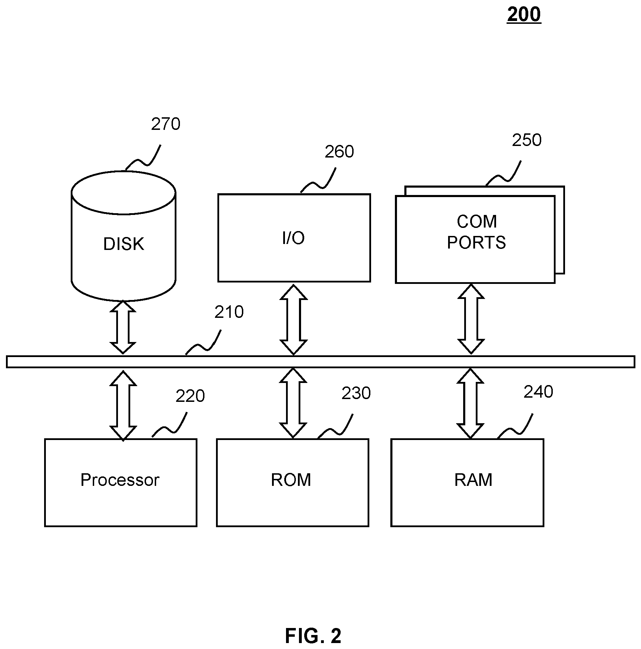

Generally, the words "module," "unit," or "block" used herein, refer to logic embodied in hardware or firmware, or to a collection of software instructions. A module, a unit, or a block described herein may be implemented as software and/or hardware and may be stored in any type of non-transitory computer-readable medium or other storage devices. In some embodiments, a software module/unit/block may be compiled and linked into an executable program. It will be appreciated that software modules can be callable from other modules/units/blocks or from themselves, and/or may be invoked in response to detected events or interrupts. Software modules/units/blocks configured for execution on computing devices (e.g., processor 220 illustrated in FIG. 2) may be provided on a computer-readable medium, such as a compact disc, a digital video disc, a flash drive, a magnetic disc, or any other tangible medium, or as a digital download (and can be originally stored in a compressed or installable format that needs installation, decompression, or decryption prior to execution). Such software code may be stored, partially or fully, on a storage device of the executing computing device, for execution by the computing device. Software instructions may be embedded in firmware, such as an EPROM. It will be further appreciated that hardware modules (or units or blocks) may be included in connected logic components, such as gates and flip-flops, and/or can be included in programmable units, such as programmable gate arrays or processors. The modules (or units or blocks) or computing device functionality described herein may be implemented as software modules (or units or blocks), but may be represented in hardware or firmware. In general, the modules (or units or blocks) described herein refer to logical modules (or units or blocks) that may be combined with other modules (or units or blocks) or divided into sub-modules (or sub-units or sub-blocks) despite their physical organization or storage.

It will be understood that when a unit, an engine, a module, or a block is referred to as being "on," "connected to," or "coupled to" another unit, engine, module, or block, it may be directly on, connected or coupled to, or communicate with the other unit, engine, module, or block, or an intervening unit, engine, module, or block may be present unless the context indicates otherwise. As used herein, the term "and/or" includes any and all combinations of one or more of the associated listed items.

The terminology used herein is for the purposes of describing particular examples and embodiments only and is not intended to be limiting. As used herein, the singular forms "a," "an," and "the" may be intended to include the plural forms as well, unless the context clearly indicates otherwise. It will be further understood that the terms "include" and/or "comprise," when used in this disclosure, specify the presence of integers, devices, behaviors, stated features, steps, elements, operations, and/or components, but do not exclude the presence or addition of one or more other integers, devices, behaviors, features, steps, elements, operations, components, and/or groups thereof.

In addition, it should be understood that in the description of the present disclosure, the terms "first", "second", or the like, are only used for the purpose of differentiation, and cannot be interpreted as indicating or implying relative importance, nor can be understood as indicating or implying the order.

The flowcharts used in the present disclosure illustrate operations that systems implement according to some embodiments of the present disclosure. It is to be expressly understood, the operations of the flowcharts may be implemented not in order. Conversely, the operations may be implemented in an inverted order, or simultaneously. Moreover, one or more other operations may be added to the flowcharts. One or more operations may be removed from the flowcharts.

The technical solutions disclosed in the embodiments of the present disclosure can be applied to object detection in image scenes. In some embodiments, a trained neural network model may be obtained based on training data containing a large number of artificially labeled objects (for example, the category and location of the objects are labeled), to realize object detection through the neural network model. In some embodiments, a large number of manual annotations are time-consuming and labor-intensive; if there are missing-labeled objects, the missing-labeled part may be trained as a negative sample during the training process, which affects the accuracy and robustness of the neural network model.

Therefore, the embodiment of this specification discloses an image detection method, which uses the detection model to identify the image category and location based on the cache data of a storage unit and the feature data of the image, which can improve the recognition accuracy of the detection model.

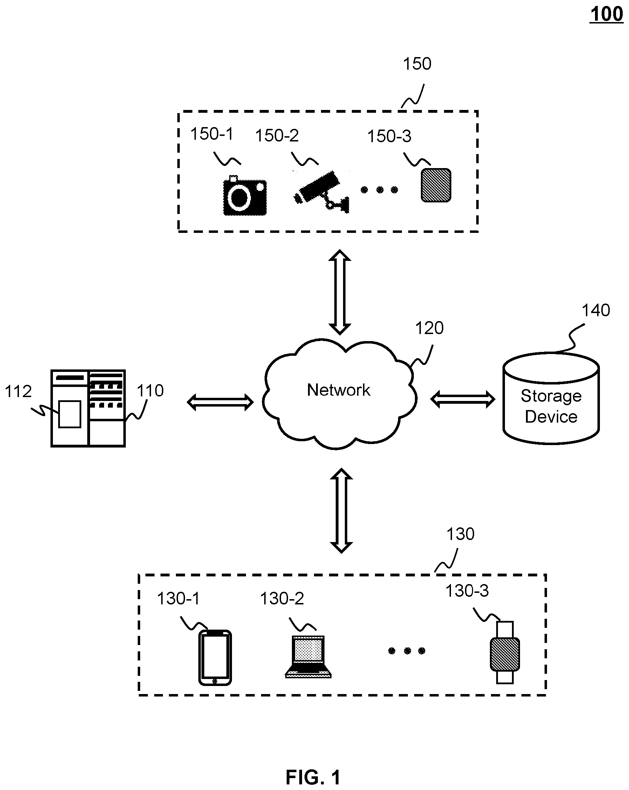

FIG.1 is a schematic diagram illustrating an exemplary image detection system according to some embodiments of the present disclosure. As shown, the image detection system 100 may include a server 110, a network 120, a user device 130, and a storage device 140.

The server 110 may be a single server or a server group. The server group may be centralized or distributed (e.g., the server 110 may be a distributed system). In some embodiments, the server 110 may be local or remote. For example, the server 110 may access information and/or data stored in the user device 130, and/or the storage device 140 via the network 120. As another example, the server 110 may be directly connected to the user device 130, and/or the storage device 140 to access stored information and/or data. In some embodiments, the server 110 may be implemented on a cloud platform. Merely by way of example, the cloud platform may include a private cloud, a public cloud, a hybrid cloud, a community cloud, a distributed cloud, an inter-cloud, a multi-cloud, or the like, or any combination thereof. In some embodiments, the server 110 may be implemented on a computing device 200 including one or more components illustrated in FIG. 2 of the present disclosure.

In some embodiments, the server 110 may include a processing device 112. The processing device 112 may process information and/or data relating to image detection to perform one or more functions described in the present disclosure. For example, the processing device 112 may use a detection model to perform operations on an image to obtain a recognition result of at least one object in the detection image. The processing device 112 may extract features of the image to obtain a feature vector of at least one pixel point in a feature image. Further, the processing device 112 may obtain a reference feature vector of at least one category from the storage device. As another example, the processing device 112 may determine a recognition result of the at least one pixel point based on the reference feature vector and the feature vector of the at least one pixel point. As a further example, the processing device 112 may determine the recognition result of the at least one object based on the recognition result of the at least one pixel point. In some embodiments, the processing device 112 may include one or more processing devices (e.g., single-core processing device(s) or multi-core processor(s)). Merely by way of example, the processing device 112 may include a central processing unit (CPU), an application-specific integrated circuit (ASIC), an application-specific instruction-set processor (ASIP), a graphics processing unit (GPU), a physics processing unit (PPU), a digital signal processor (DSP), a field-programmable gate array (FPGA), a programmable logic device (PLD), a controller, a microcontroller unit, a reduced instruction set computer (RISC), a microprocessor, or the like, or any combination thereof.

In some embodiment, the sever 110 may be unnecessary and all or part of the functions of the server 110 may be implemented by other components (e.g., the user device 130) of the image detection system 100. For example, the processing device 112 may be integrated into the user device 130 and the functions (e.g., determining the recognition result of at least one object in the detection image) of the processing device 112 may be implemented by the user device130.

The network 120 may facilitate the exchange of information and/or data for the image detection system 100. In some embodiments, one or more components (e.g., the server 110, the user device 130, and the storage device 140) of the image detection system 100 may transmit information and/or data to other components (s) of the image detection 100 via the network 120. For example, the server 110 may obtain an image from the user device 130 or the storage device 140 via the network 120. As another example, the server 110 may transmit the recognition result to the user device 130 via the network 120. In some embodiments, the network 120 may be any type of wired or wireless network, or combination thereof. Merely by way of example, the network 120 may include a cable network (e.g., a coaxial cable network), a wireline network, an optical fiber network, a telecommunications network, an intranet, an Internet, a local area network (LAN), a wide area network (WAN), a wireless local area network (WLAN), a metropolitan area network (MAN), a public telephone switched network (PSTN), a Bluetooth network, a ZigBee network, a near field communication (NFC) network, or the like, or any combination thereof.

The user device 130 may be configured to receive information and/or data from the server 110, and/or the storage device 140. For example, the user device 130 may receive the recognition result of the at least one object from the server 110. In some embodiments, the user device 130 may include a mobile phone 130-1, a computer 130-2, a wearable device 130-3, or the like, or any combination thereof. In some embodiments, the user device 130 may include a display that can display information in a human-readable form, such as text, image, audio, video, graph, animation, or the like, or any combination thereof. The display of the user device 130 may include a cathode ray tube (CRT) display, a liquid crystal display (LCD), a light emitting diode (LED) display, a plasma display panel (PDP), a three-dimensional (3D) display, or the like, or a combination thereof. In some embodiments, the user device 130 may be connected to one or more components (e.g., the server 110, the user device 130, and the storage device 140) of the image detection system 100 via the network 120.

The storage device 140 may be configured to store data and/or instructions. The data and/or instructions may be obtained from, for example, the server 110, the user device 130, and/or any other component of the image detection system 100. In some embodiments, the storage device 140 may store data and/or instructions that the server 110 may execute or use to perform exemplary methods described in the present disclosure. In some embodiments, the storage device 140 may include mass storage, removable storage, a volatile read-and-write memory, a read-only memory (ROM), or the like, or any combination thereof. Exemplary mass storage may include a magnetic disk, an optical disk, a solid-state drive, etc. Exemplary removable storage may include a flash drive, a floppy disk, an optical disk, a memory card, a zip disk, magnetic tape, etc. Exemplary volatile read-and-write memory may include a random access memory (RAM). Exemplary RAM may include a dynamic RAM (DRAM), a double date rate synchronous dynamic RAM (DDR SDRAM), a static RAM (SRAM), a thyristor RAM (T-RAM), and a zero-capacitor RAM (Z-RAM), etc. Exemplary ROM may include a mask ROM (MROM), a programmable ROM (PROM), an erasable programmable ROM (EPROM), an electrically erasable programmable ROM (EEPROM), a compact disk ROM (CD-ROM), and a digital versatile disk ROM, etc. In some embodiments, the storage device 140 may be implemented on a cloud platform. Merely by way of example, the cloud platform may include a private cloud, a public cloud, a hybrid cloud, a community cloud, a distributed cloud, an inter-cloud, a multi-cloud, or the like, or any combination thereof.

In some embodiments, the storage device 140 may be connected to the network 120 to communicate with one or more components (e.g., the server 110, the user device 130) of the image detection system 100. One or more components of the image detection system 100 may access the data or instructions stored in the storage device 140 via the network 120. In some embodiments, the storage device 140 may be directly connected to or communicate with one or more components (e.g., the server 110, the user device 130) of the image detection system 100. In some embodiments, the storage device 140 may be part of other components of the image detection system 100, such as the server 110, the user device 130.

The image acquisition device 150 may be configured to acquire image data. The image data acquired by the image acquisition device 150 may include one or more images, a video, or any data about a video and/or an image, such as values of one or more pixels (or referred to as pixel values) of one or more images (e.g., luma, gray values, intensities, chrominance, the contrast of one or more pixels of one or more image), RGB data, audio information, timing information, location data, etc. In some embodiments, the image acquisition device 150 may include a camera 150-1, a video recorder 150-2, an image sensor 150-3, etc. The camera 150-1 may include a gun camera, a dome camera, an integrated camera, a monocular camera, a binocular camera, a multi-view camera, or the like, or any combination thereof. The video recorder 150-2 may include a PC Digital Video Recorder (DVR), an embedded DVR, or the like, or any combination thereof. The image sensor 150-1 may include a charge-coupled device (CCD), a complementary metal-oxide semiconductor (CMOS), or the like, or any combination thereof. In some embodiments, the image acquisition device 150 may transmit the acquired image to the processing device 112 for processing.

In some embodiments, the image acquisition device 150 may be integrated into the user device 130.

It should be noted that the above description is merely provided for the purposes of illustration, and not intended to limit the scope of the present disclosure. For persons having ordinary skills in the art, multiple variations and modifications may be made under the teachings of the present disclosure. However, those variations and modifications do not depart from the scope of the present disclosure.

FIG. 2 is a schematic diagram illustrating exemplary hardware and/or software components of an exemplary computing device according to some embodiments of the present disclosure. In some embodiments, the server 110 may be implemented on the computing device 200. For example, the processing device 112 may be implemented on the computing device 200 and configured to perform functions of the processing device 112 disclosed in this disclosure.

The computing device 200 may be used to implement any component of the image detection system 100 as described herein. For example, the processing device 112 may be implemented on the computing device 200, via its hardware, software program, firmware, or a combination thereof. Although only one such computer is shown, for convenience, the computer functions relating to image detection as described herein may be implemented in a distributed fashion on a number of similar platforms to distribute the processing load.

The computing device 200, for example, may include COM ports 250 connected to and from a network connected thereto to facilitate data communications. The computing device 200 may also include a processor (e.g., a processor 220), in the form of one or more processors (e.g., logic circuits), for executing program instructions. For example, the processor 220 may include interface circuits and processing circuits therein. The interface circuits may be configured to receive electronic signals from a bus 210, wherein the electronic signals encode structured data and/or instructions for the processing circuits to process. The processing circuits may conduct logic calculations, and then determine a conclusion, a result, and/or an instruction encoded as electronic signals. Then the interface circuits may send out the electronic signals from the processing circuits via the bus 210.

The computing device 200 may further include program storage and data storage of different forms including, for example, a disk 270, a read-only memory (ROM) 230, or a random-access memory (RAM) 240, for storing various data files to be processed and/or transmitted by the computing device 200. The computing device 200 may also include program instructions stored in the ROM 230, RAM 240, and/or another type of non-transitory storage medium to be executed by the processor 220. The methods and/or processes of the present disclosure may be implemented as the program instructions. The computing device 200 may also include an I/O component 260, supporting input/output between the computing device 200 and other components. The computing device 200 may also receive programming and data via network communications.

Merely for illustration, only one processor is illustrated in FIG. 2. Multiple processors 220 are also contemplated; thus, operations and/or method steps performed by one processor 220 as described in the present disclosure may also be jointly or separately performed by the multiple processors. For example, if in the present disclosure the processor 220 of the computing device 200 executes both step A and step B, it should be understood that step A and step B may also be performed by two different processors 220 jointly or separately in the computing device 200 (e.g., a first processor executes step A and a second processor executes step B, or the first and second processors jointly execute steps A and B).

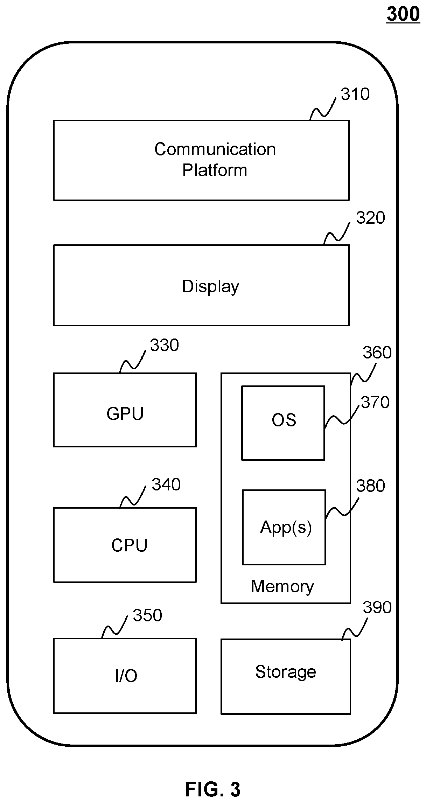

FIG. 3 is a schematic diagram illustrating exemplary hardware and/or software components of an exemplary terminal device according to some embodiments of the present disclosure. In some embodiments, the user device 140 may be implemented on the terminal device 300 shown in FIG. 3.

As illustrated in FIG. 3, the terminal device 300 may include a communication platform 310, a display 320, a graphic processing unit (GPU) 330, a central processing unit (CPU) 340, an I/O 350, a memory 360, and a storage 390. In some embodiments, any other suitable component, including but not limited to a system bus or a controller (not shown), may also be included in the terminal device 300.

In some embodiments, an operating system 370 (e.g., iOS™, Android™, Windows Phone™) and one or more applications (Apps) 380 may be loaded into the memory 360 from the storage 390 in order to be executed by the CPU 340. The applications 380 may include a browser or any other suitable mobile apps for receiving and rendering information relating to image detection or other information from the processing device 112. User interactions may be achieved via the I/O 350 and provided to the processing device 112 and/or other components of the image detection system 100 via the network 120.

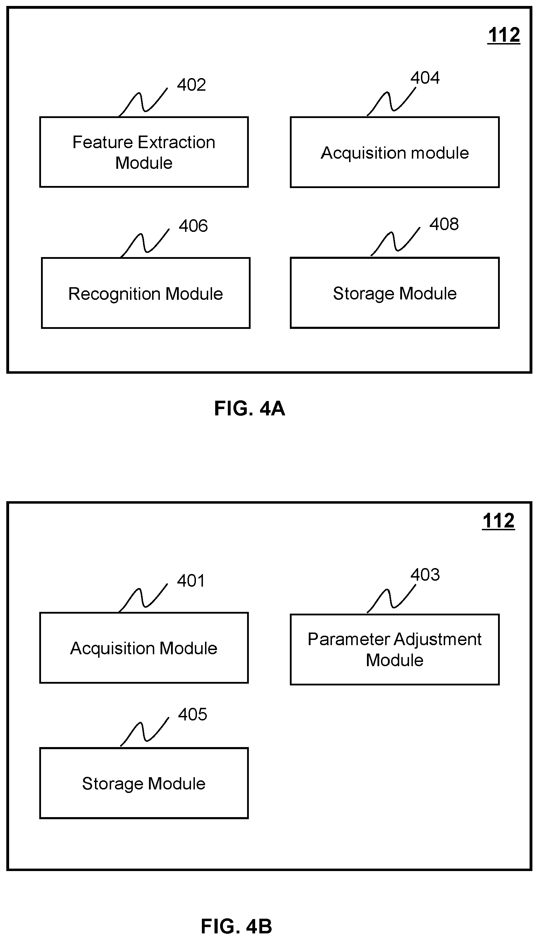

FIG. 4A is a block diagram illustrating an exemplary processing device according to some embodiments of the present disclosure. The processing device 112 may include a feature extraction module 402, an acquisition module 404, a recognition module 406, and a storage module 408. In some embodiments, the recognition module 406 may further include a category determination unit and a position determination unit.

The feature extraction module 402 may be configured to extract features of the detection image to obtain a feature vector of at least one pixel point in a feature image.

The acquisition module 404 may be configured to obtain data for image detection. In some embodiments, the acquisition module 404 may be configured to obtain a detection image. In some embodiments, the acquisition module 404 may be configured to obtain a detection model configured to determine a recognition result of at least one object in the detection image after the detection image is inputted into the detection model. In some embodiments, the acquisition module 404 may be further configured to obtain a reference feature vector corresponding to at least one category from a storage unit.

The recognition module 406 may be configured to determine a recognition result of at least one pixel point based on the reference feature vector and the feature vector of the at least one pixel point; and determine the recognition result of at least one object in the detection image based on the recognition result of the at least one pixel point.

The recognition result includes a category and a position, the feature vector comprises a classification feature vector and a position feature vector, the reference feature vector may include a reference classification feature vector corresponding to the classification feature vector and a reference position feature vector corresponding to the position feature vector. The recognition module 406 is futher configured to determine the category of the pixel point based on the classification feature vector of the pixel point and the reference classification feature vector corresponding to each of the one or more categories; and determine the position of the pixel point based on the position feature vector of the pixel point and the reference position feature vector corresponding to each of the one or more categories.

In some embodiments, the recognition module 406 may be further configured to determine initial category information of the pixel point based on the classification feature vector of the pixel point; determine a similarity degree between the classification feature vector of the pixel point and the reference classification feature vector corresponding to each of the one or more categories; and determine a category of the pixel point based on the initial category information and the similarity degree.

In some embodiments, the recognition module 406 may be further configured to determine an updated position feature vector of the pixel point based on the position feature vector of the pixel point and the reference position feature vector corresponding to each of the one or more categories; determine distance information of the pixel point based on the updated position feature vector of the pixel point. The distance information may indicate a distance between the pixel point and a bounding box corresponding to the pixel point; In some embodiments, the recognition module 406 may determine a position of the pixel point based on the distance information.

The storage module 408 may be configured to store data generated by the above modules. For example, the storage module 408 may be configured to store the detection images, the detection model, the reference feature vectors, or the like, or a combination thereof. In some embodiments, the storage module 408 and/or the feature extraction module 402 may be integrated into the recognition module 406.

FIG. 4B is a block diagram illustrating an exemplary processing device according to some embodiments of the present disclosure. The processing device 112 may include an acquisition module 401, a parameter adjustment module 403, and a storage module 405.

The acquisition module 401 may be configured to obtain data for the training of a detection model. In some embodiments, the acquisition module 401 may be configured to obtain a plurality of sample images including a first portion and a second portion. Each sample image in the first portion may include one or more labels. The labels may be configured to characterize at least one of a labeled category or a labeled position of each of one or more sample objects in the each sample image in the first portion. In some embodiments, the acquisition module 401 may be configured to obtain a preliminary detection model.

The parameter adjustment module 403 may be configured to updating, based on the plurality of sample images, parameter values of a preliminary detection model through multiple iterations to reduce a loss function value corresponding to each sample image. In each of the multiple iterations, The parameter adjustment module 403 may be configured to extract features of the sample image to obtain a sample feature vector of each of at least one sample pixel point; obtain a sample reference feature vector corresponding to each of one or more labeled categories cached in a storage unit in the iteration; and update the parameter values of a preliminary detection model based on the sample feature vector and the sample reference feature vector.

In some embodiments, the parameter adjustment module 403 may be further configured to determine a predicted recognition result of the sample pixel point based on the sample reference feature vector and the sample feature vector; determining a predicted recognition result of each of the one or more sample objects based on the predicted recognition result of the sample pixel point; and determine the loss function value based on a difference between the predicted recognition result of the sample object and the labels of the sample image.

In some embodiments, the predicted recognition result may include a predicted category and a predicted position. The sample feature vector may include a sample classification feature vector and a sample position feature vector. The sample reference feature vector may include a sample reference classification feature vector corresponding to the sample classification feature vector and a sample reference position feature vector corresponding to the sample position feature vector. The parameter adjustment module 403 may be further configured to determine the predicted category of the sample pixel point based on the sample classification feature vector and the sample reference classification feature vector; and determine the predicted position of the sample pixel point based on the sample position feature vector and the sample reference position feature vector.

In some embodiments, the parameter adjustment module 403 may be further configured to determine sample pixel points of different labeled categories in a sample image, the sample pixel points satisfying a condition; based on sample classification feature vectors of the sample pixels, determine the sample reference classification feature vector corresponding to at least one of the one or more labeled categories in the current iteration by updating sample reference classification feature vectors corresponding to different labeled categories in a previous iteration of the current iteration; and based on the sample position feature vectors of the sample pixels of different labeled categories, determine the sample reference position feature vector corresponding to at least one of the one or more labeled categories in the current iteration by updating the sample reference position feature vectors corresponding to different labeled categories in the previous iteration of the current iteration.

In some embodiments, the condition may include that a degree of overlap between a predicted position corresponding to the sample pixel point and a labeled position in the sample image is higher than a threshold.

In some embodiments, the parameter adjustment module 403 may be further configured to determine the sample reference classification feature vector and the sample reference position feature vector corresponding to at least one of the one or more labeled categories generated in an iteration when the training process is terminated as reference feature vectors corresponding to at least one of the one or more labeled categories.

In some embodiments, the parameter adjustment module 403 may be further configured to determine sample initial category information of the sample pixel point based on the sample classification feature vector of the sample pixel point; determine a sample similarity degree between the sample classification feature vector and the sample reference classification feature vector corresponding to each of the one or more categories; and determine the predicted category of the sample pixel point based on the sample initial category information and the sample similarity degree.

In some embodiments, the parameter adjustment module 403 may be further configured to determine a sample updated position feature vector of the sample pixel point based on the sample position feature vector and the sample reference position feature vector corresponding to each of the one or more categories; determine distance information of the sample pixel point based on the sample updated position feature vector of the sample pixel point; the sample distance information indicating a distance between the sample pixel point and a bounding box of the sample pixel point; determine the predicted position of the sample pixel point based on the sample distance information.

The storage module 405 may be configured to store data generated by the above modules. For example, the storage module 405 may be configured to storge sample images, labels of sample images, parameter values of the preliminary detection model generated in each iteration, the sample reference feature vectors corresponding to each of the one or more categories updated in each iteration, the trained preliminary detection model, etc.

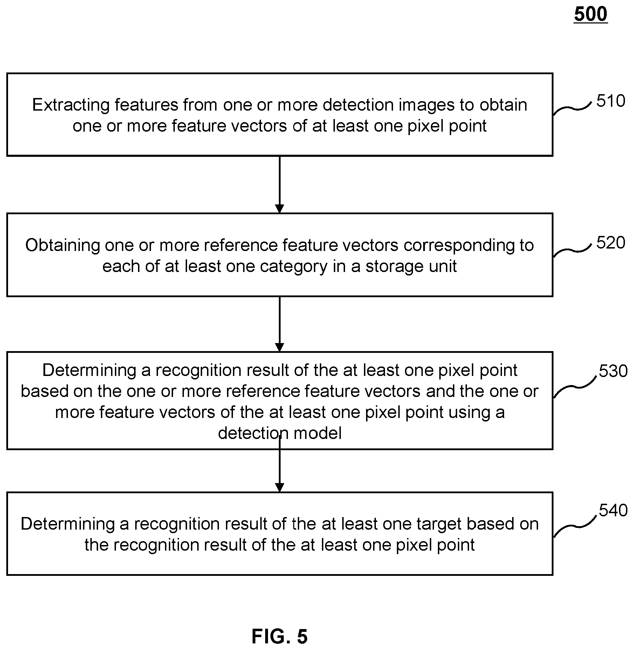

FIG. 5 is a flowchart illustrating an exemplary process for object detection according to some embodiments of the present disclosure. In some embodiments, process 500 may be executed by the image detection system 100. For example, the process 500 may be implemented as a set of instructions (e.g., an application) stored in a storage device (e.g., the storage device 140, the ROM 230, the RAM 240, and/or the storage 390). In some embodiments, the processing device 112 (e.g., the processor 220 of the computing device 200, the CPU 340 of the mobile device 300, and/or one or more modules illustrated in FIG. 4A) may execute the set of instructions and may accordingly be directed to perform the process 500. The operations of the illustrated process presented below are intended to be illustrative. In some embodiments, the process 500 may be accomplished with one or more additional operations not described and/or without one or more of the operations discussed. Additionally, the order of the operations of process 500 illustrated in FIG. 5 and described below is not intended to be limiting. As used herein, object detection may also be referred to as target detection. The object detection refers to recognize one or more objects from an image to be detected (also referred to as detection image). Recognizing one or more objects may include determining the positions of the one or more objects represented in the image, the types (or categories) of the one or more objects, and/or the identities of the one or more objects.

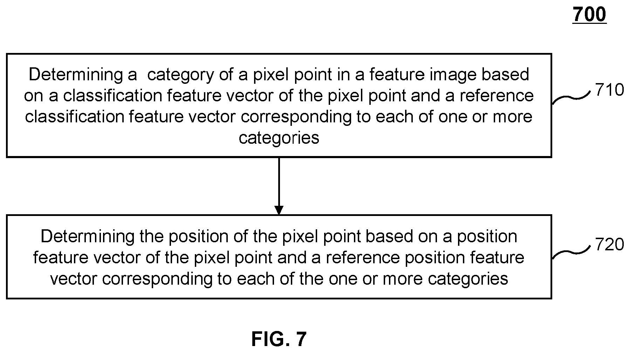

As shown in FIG. 5, process 500 may include operations 510-540, which may be performed after the processing device 112 inputs one or more detection images into a detection model. In some embodiments, the detection model may process multiple detection images at the same time. In some embodiments, the detection model may be a pre-trained machine learning model. The trained detection model may be used to process each of the one or more detection images to obtain a recognition result of at least one object in the each of the one or more detection images. More descriptions regarding the training process for the detection model may be found elsewhere in the present disclosure. See, e.g., FIG. 7 and relevant descriptions thereof.

In some embodiments, the detection model may include multiple portions. For example, multiple portions may include a feature extraction portion, a recognition portion, a box regression portion. The feature extraction portion may include a feature extraction network, and the feature extraction portion may extract features from each of one or more detection images to obtain a feature image that includes one or more feature vectors of at least one pixel point in the feature image. The recognition portion may include a classification layer and a compute layer, and the recognition portion may determine the category of the pixel point. The box regression portion may include a box regression layer, and the box regression portion may determine the position and size of the box of the target.

The process 500 of the detection model processing the image to obtain the recognition result of at least one object in one or more detection images may be described below.

In 510, the processing device 112 may extract features from one or more detection images to obtain one or more feature vectors of at least one pixel point. In some embodiments, operation 510 may be performed by the feature extraction module 402.

In some embodiments, the detection image may be an image that needs to be detected. In some embodiments, the detection image may be an image in any format. For example, the detection image may be in an RGB format, an HSV format, a YUV format, etc.

In some embodiments, the detection image may be obtained based on one or more pretreatment operations. Exemplary pretreatment operations may include a normalization operation, a dimensional transformation operation, etc. For example, the detection image may be obtained by normalizing an image to a preset size, and the preset size may be specifically set according to the actual needs. For example, the preset size may include 800*1024, where the 800*1024 means that the height is 800 and the width is 1024.

In some embodiments, the processing device 112 may obtain the detection image from the user terminal 130, the storage device 140, the image acquisition device 150, or a database.

In some embodiments, the processing device 112 may extract features from the detection image to obtain one or more feature images. Each of the one or more feature images may include the one or more feature vectors of each of one or more pixel points in the feature image. In some embodiments, the one or more pixel points in the feature image of the detection image may have a mapping relationship between one or more pixel points in the detection image. For example, a pixel point in the feature image may correspond to a pixel point in the detection image that has the position in the feature image same as the position corresponding to a pixel point in the feature image. In some embodiments, the pixel point in the feature image may also be referred to as a feature point. The feature images may be obtained by the processing device 112 using a feature extraction network to extract features from the detection image. In some embodiments, the feature extraction network may be a portion of the detection model used to recognize one or more objects in the detection image. In some embodiments, the feature extraction network may be a model separated from the detection model.

The feature extraction network may include a backbone network and a feature network. In some embodiments, the backbone network may include multiple convolutional layers. The multiple convolutional layers may output the feature image of different sizes. For example, the feature image size may include 100*128, 50*64, 25*32, etc. In some embodiments, the feature network may include one or more feature layers. In some embodiments, the output of the last convolutional layer among the multiple convolutional layers may be the input of the first feature layer of the one or more feature layers, and the last feature layer of the one or more feature layers may output the feature image of the detection image. In some embodiments, the processing device 112 may obtain one or more feature vectors of each of at least one pixel point from the feature image. In some embodiments, the backbone network may include, ResNet50 (Residual Network50), VGG16 (Visual Geometry Group16), ResNext34, or the like, or a combination thereof. In some embodiments, the feature layer may include a convolutional layer.

In some embodiments, the one or more feature vectors of each of at least one pixel point may include a classification feature vector and/or a position feature vector.

In some embodiments, different feature vectors may be obtained in different feature images. For example, the classification feature vector may be obtained by a classification feature image of the detection image, and the position feature vector may be obtained by a position feature image of the detection image. In some embodiments, different feature images may be obtained through different feature extraction networks. For example, the classification feature image may be obtained by a first feature extraction network, and the position feature image may be obtained by a second feature extraction network. The first feature extraction network may be configured to extract features (also referred to as type features) from the detection image that may indicate type information of pixel points in the detection image. The second feature extraction network may be configured to extract features (also referred to as position features) from the detection image that may indicate position information of pixel points in the detection image. In some embodiments, the first feature extraction network and/or the second feature extraction network may include a backbone network and a feature network. More descriptions regarding the backbone network and the feature network may be found elsewhere in the present disclosure.

In some embodiments, the detection image may be inputted into the backbone network to obtain an initial feature image. The initial feature image may be inputted to the feature network to obtain the feature image. In some embodiments, the first feature extraction network may include a first backbone network and a first feature network. The second feature extraction network may include a second backbone network and a second feature network. In some embodiments, the first backbone network and the second backbone network may be separated. In some embodiments, the first feature extraction network and the second feature extraction network may share a backbone network, i.e., the first backbone network and the second backbone network may be the same backbone network. The initial feature image obtained after the backbone network processes the detection image may be input to the first feature network and the second feature network, respectively to obtain the classification feature vector and the position feature vector.

In some embodiments, the feature layer of one of the first feature network and the feature layer of the second feature network may include a fully connected layer or a convolution layer. In some embodiments, the feature layer of the first feature network may include a fully connected layer, and the feature layer of the second feature network may include a residual block. The residual block may have a stronger spatial correlation to be suitable for positioning by extracting features indicating a position of an object. The classification feature vector of a pixel point obtained by the first feature network may include extracted features that indicate category information of the pixel point, and the position feature vector obtained by the second feature network may include extracted features that indicate position information of the pixel point. In some embodiments, the classification feature and/or the position feature vector may include Haar feature, LBF (local binary pattern) feature, and HOG (histogram of orientation gradient).

In some embodiments, the classification feature vector may be represented as $F_c$ with dimensionalities denoted as (B*N*H*W), and the position feature vector may be represented as $F_b$ with dimensionalities denoted as [B*(n*M)*H*W], where B represents the number of detection images inputted to the detection model; n represents the count (or number) of the labeled categories of the detection model(e.g., if in the training of the detection model, the labels of training samples of the detection model include 3 categories, the count (or number) of the labeled categories may be 3.); N represents the length of the classification feature vector, M represents the length of the position feature vector, H represents the height of a feature image (e.g., the classification feature image, and the position feature image), and W represents the width of the feature image (e.g., the classification feature image, and the position feature image). In some embodiments, the height and the width of the classification feature image and the position feature image may be the same. In some embodiments, the length of the classification feature vector and the position feature vector may be the same or different.

In 520, the processing device 112 may obtain one or more reference feature vectors corresponding to each of at least one category in a storage unit. In some embodiments, operation 520 may be performed by the acquisition module 404.

In some embodiments, the at least one category may be determined based on the labeled categories of the detection model. For example, if the count (or number) of labeled categories of the detection model is n (where n> 1), the at least one category may include n categories. Each of the at least one category may correspond to one or more reference feature vectors. The reference feature vectors corresponding to a category may indicate the value of each feature of the category. The each feature may correspond to the feature length.

In some embodiments, the one or more reference feature vectors corresponding to a category may include a reference classification feature vector corresponding to classification feature vectors associated with objects of the category represented in an image (e.g., the detection image in operation 510) and/or a reference position feature vector corresponding to position feature vectors associated with objects of the category represented in an image (e.g., the detection image in operation 510). In some embodiments, the one or more reference feature vectors corresponding to each of at least one category may include the reference classification feature vector corresponding to each of the at least one category and the reference position feature vector corresponding to each of the at least one category.

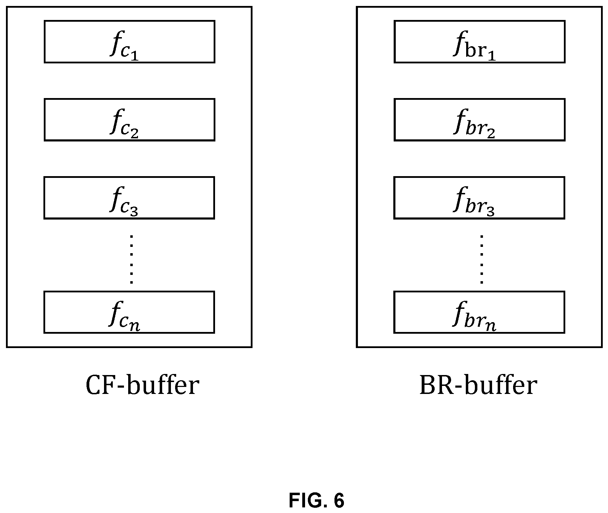

As shown in FIG.6, in some embodiments, the reference classification feature vectors of n categories may be represented as CF_buffer with dimensionalities denoted as (n*N). More descriptions regarding the representations of n, N may be found elsewhere in the present disclosure. The reference classification feature vector of each category may be represented as $f_{c_i}$ with dimensionalities denoted as (1*N), where i represents a category i. The reference position feature vectors of n categories may be represented as BR_buffer with dimensionalities denoted as (n*M). The reference classification feature vector of each category may be represented as $f_{b_i}$ with dimensionalities denoted as (1*M), where i represents a category i.

As shown in FIG.6, the CF_buffer or the reference classification feature vectors of n categories may include: $f_{c_1}$, the reference classification feature vector of category 1, $f_{c_2}$, the reference classification feature vector of category 2, $f_{c_3}$, the reference classification feature vector of category 3, ..., $f_{c_n}$, the reference classification feature vector of category n. The BR_buffer or the reference position feature vectors of n categories may include: $f_{br_1}$, the reference position feature vector of category 1, $f_{br_2}$, the reference position feature vector of category 2, $f_{br_3}$, the reference position feature vector of category 3, ..., $f_{br_n}$, the reference position feature vector of category n.

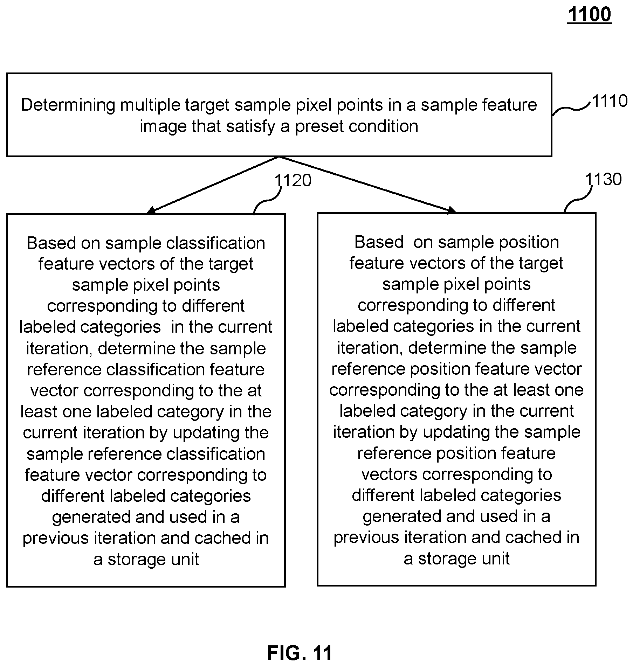

In some embodiments, the one or more reference feature vectors of each of at least one category (e.g., the reference classification feature vector of each of at least one category and the reference position feature vector of each of at least one category) may be obtained in the training process of the detection model and stored (e.g., cached) in the storage unit. The storage unit may include the storage device 140, the storage module 405, etc. The one or more reference feature vectors may be obtained in the training of the detection model. More descriptions regarding obtaining the reference feature vectors of each of at least one category may be found elsewhere in the present disclosure. See, e.g., FIG. 11 and relevant descriptions thereof.

In 530, the processing device 112 may determine a recognition result of the at least one pixel point based on the one or more reference feature vectors and the one or more feature vectors of the at least one pixel point using a detection model. In some embodiments, operation 530 may be performed by the recognition module 406.

In some embodiments, the recognition result may include a category and/or a position of each of one or more objects represented in the detection image. For example, the categories may include cats, dogs, birds, humans, etc. In some embodiments, the position may be marked by a bounding box. The bounding box may surround the object (or target).

In some embodiments, the processing device 112 may determine the category of at least one pixel point based on the reference classification feature vector corresponding to each of at least one category and the classification feature vector of the at least one pixel point. More descriptions regarding determining the category of at least one pixel point may be found elsewhere in the present disclosure. See, e.g., operation 710 and relevant descriptions thereof.

In some embodiments, the processing device 112 may determine the position of at least one pixel point based on the reference position feature vector of each of the at least one category and the position feature vector of at least one pixel. As used herein, the position of a pixel point refers to which one among the one or more objects represented in the detection image that the pixel point represents. In some embodiments, the one or more objects represented in the detection image may be marked using a bounding box after being detected or recognized. The position of a pixel point may refer to which one among one or more bounding boxes representing the one or more objects the pixel point belongs to or is within. The bounding box where the pixel point belongs may also be referred to as the bounding box corresponding to the pixel point. More descriptions regarding determining the position of the at least one pixel point may be found elsewhere in the present disclosure. See operation, e.g., 720 and relevant descriptions thereof.

In 540, the processing device 112 may determine a recognition result of the at least one target based on the recognition result of the at least one pixel point. In some embodiments, operation 540 may be performed by the recognition module 406.

In some embodiments, at least one object recognized from the detection image may also be referred to as a target. The target may be an object of interest in the detection image. For example, for images acquired in a blind guide system, the target (i.e., objects of interest) may include a vehicle, a pedestrian, a traffic identity, a traffic light, etc. In some embodiments, the processing device 112 may process the recognition result of the at least one pixel point using the non-maximum suppression (NMS) algorithm to determine the recognition result of at least one object. Using the NMS algorithm, the bounding box corresponding to the at least one pixel point with a higher confidence level may be determined, and the bounding box corresponding to the at least one pixel point with a lower confidence level may be suppressed, thereby determining a bounding box where the pixel point belongs, and thus the recognition result of the object may be determined based on the bounding box and the category of the bounding box. More descriptions regarding confidence level may be found elsewhere in the present disclosure. See operation, e.g., 710 and relevant descriptions thereof.

FIG. 7 is a flowchart illustrating an exemplary process for determining the recognition result of a pixel point in a detection image according to some embodiments of the present disclosure. In some embodiments, process 700 may be performed by the image detection system 100. For example, the process 700 may be implemented as a set of instructions (e.g., an application) stored in a storage device (e.g., the storage device 140, the ROM 230, the RAM 240, and/or the storage 390). In some embodiments, the processing device 112 (e.g., the processor 220 of the computing device 200, the CPU 340 of the mobile device 300, and/or one or more modules illustrated in FIG. 4A) may execute the set of instructions and may accordingly be directed to perform the process 700. The operations of the illustrated process presented below are intended to be illustrative. In some embodiments, the process 700 may be accomplished with one or more additional operations not described and/or without one or more of the operations discussed. Additionally, the order of the operations of process 700 illustrated in FIG. 7 and described below is not intended to be limiting. Operation 530 may be performed according to process 700 as illustrated in FIG. 7.

In 710, the processing device 112 may determine a category of a pixel point in a feature image based on a classification feature vector of the pixel point and a reference classification feature vector corresponding to each of one or more categories. In some embodiments, operation 710 may be performed by the recognition module 406. More descriptions for the classification feature vector and the reference classification feature vector of the pixel point may be found elsewhere in the present disclosure (e.g., FIG. 5 and the descriptions thereof).

In some embodiments, the processing device 112 may determine initial category information of the pixel point based on the classification feature vector of the pixel point, determine a similarity degree between the classification feature vector of the pixel point and the reference feature vector corresponding to each of the one or more categories, and determine the category (also referred to as a target category) of the pixel point based on the initial category information and the similarity degree. In some embodiments, the processing device 112 may determine the category (also referred to as a target category) of the pixel point by performing a weighting operation based on the initial category information and the similarity degree. In some embodiments, the weighted operation may include weighting summation, weighting averaging, or the like.

In some embodiments, the initial category information may indicate the initial category of the pixel point. In some embodiments, the initial category information may include an initial score (also referred to as an initial category score) of the pixel point belonging to each of one or more categories. For example, if the detection model is configured to identify n categories of objects, the initial category score of the pixel score corresponding to each of the n categories may indicate a probability of the pixel point belonging to each of the n categories. The greater the initial category score of the pixel point corresponding to one of the n categories is, the greater the probability of the pixel point belonging to the one of the n categories may be.

In some embodiments, the processing device 112 may use the classification layer of the detection model to process the classification feature vector of the pixel point to determine the initial category information of the pixel point. In some embodiments, the classification layer may include a fully connected layer and a normalization layer. In some embodiments, the classification layer may include a convolutional layer and a normalization layer. The normalization layer may include a softmax layer or a logits layer.

In some embodiments, the initial category information may be represented as S, and S may be a vector with dimensionalities denoted as (B*N*H*n). More descriptions regarding the representations of B, N, H, n may be found elsewhere in the present disclosure. See, e.g., operation 510 and relevant descriptions thereof.

In some embodiments, the similarity degree may indicate a difference between the classification feature vector of the at least one pixel point and the reference classification feature vector corresponding to each of the one or more categories. In some embodiments, the processing device 112 may determine a distance between the classification feature vector of the pixel point and the reference feature vector corresponding to each of the one or more categories, and determine the similarity degree based on the distance. The distance between the classification feature vector of the pixel point and the reference feature vector corresponding to a category may indicate the similarity degree between the classification feature vector of the pixel point and the reference feature vector corresponding to the category. In some embodiments, the smaller the distance is, the greater the similarity degree may be. In some embodiments, the greater the distance is, the smaller the similarity degree may be. In some embodiments, exemplary distances may include a cosine distance, a Euclidean distance, a Manhattan distance, a Mahalanobis distance, a Minkowski distance, etc.

In some embodiments, the processing device 112 may determine the similarity degree using the compute layer of the detection model by multiplying the classification feature vector of the pixel point and the reference classification feature vector corresponding to each of the one or more categories. In some embodiments, the compute layer may be included in the classification layer or connected to the classification layer.

In some embodiments, the processing device 112 may weight the initial category score in the initial category information corresponding to a category and the similarity degree between the classification feature vector of the pixel point and the reference classification feature vector corresponding to the category to determine a confidence level. In some embodiments, the processing device 112 may determine the confidence level using the compute layer of the detection model. In some embodiments, the processing device 112 may determine multiple confidence levels of the pixel point corresponding to the one or more categories. For each of the one or more categories, the processing device 112 may weigh the initial category score corresponding to the category and the similarity degree between the classification feature vector of the pixel point and the reference classification feature vector corresponding to the category. In some embodiments, the confidence levels of the pixel point corresponding to the one or more categories may be designated as category information of the pixel point and may be used to update the initial category information of the pixel point. Similar to the initial category information, the category information of the pixel point may include one or more category scores corresponding to the one or more categories, and a category score of the pixel point corresponding to one of the one or more categories may reflect the score or probability that the pixel point belongs to the one of the one or more categories.

In some embodiments, the processing device 112 may determine the target category of the pixel point based on the confidence level or the category score corresponding to each of the one or more categories. For example, the processing device 112 may designate one of the one or more categories corresponding to the highest category score or the maximum confidence level as the target category that the pixel point belongs to.

In some embodiments, the processing device 112 may determine the confidence level of each of at least one pixel corresponding to one of the one or more categories based on the following formula (1):

$$\mathrm{score} = \mathrm{m} * S + (1 - \mathrm{m}) * F_C * CF\_\mathrm{buffer}^T, \qquad\qquad (1)$$

where score refers to the confidence level, m refers to a weight coefficient, S refers to the initial category information (i.e., the initial category score); $F_C$ refers to a classification feature vector, $CF\_\mathrm{buffer}^T$ refers to a transposed vector of the reference classification feature vector of each of the one or more categories (e.g., n categories).

In some embodiments, the compute layer connected to the classification layer may include formula (1). In some embodiments, the weight coefficient m may be specifically set according to the actual needs. The weight coefficient m may be a value ranging from 0 to 1. In some embodiments, the weight coefficient m may be greater than 0.5, for example, 0.6 or 0.8, or the like. By setting the weight coefficient to a value greater than 0.5, the impact of the similarity degree to the confidence level may be smaller than that of the initial category information confidence level, thereby ensuring the reliability of the confidence level.

In some embodiments, by calculating the similarity degree between the classification feature vector of each pixel point and reference classification feature vector corresponding to each of the one or more categories (the higher the similarity degree, the more likely the pixel point belongs to the category), the initial category information of the pixel point may be corrected or updated based on the confidence level that is determined based on the similarity degree and the initial category information. The higher the similarity degree is, the higher the final confidence level may be, thus improving the accuracy of the recognization result of the detection model.

In 720, the processing device 112 may determine the position corresponding to the pixel point based on a position feature vector of the pixel point and a reference position feature vector corresponding to each of the one or more categories. In some embodiments, operation 720 may be performed by the recognition module 406.

In some embodiments, the processing device 112 may determine the position corresponding to the pixel point in the feature image based on a weighted operation result between the position feature vector of the pixel point and the reference feature vector. In some embodiments, weighted operations may include weighted summation, weighted averaging, or the like.

In some embodiments, the processing device 112 may determine an updated position feature vector of the pixel point based on the position feature vector of the pixel point and the reference position feature vector corresponding to each of the one or more categories. In some embodiments, the processing device 112 may determine the updated position feature vector of the pixel point by performing a weighted sum operation on the reference position feature vector corresponding to one of the one or more categories and the position feature vectors of the pixel point. In some embodiments, the processing device 112 may determine one or more updated position feature vectors of the pixel point corresponding to the one or more categories based on the reference position feature vectors corresponding to the one or more categories and the position feature vector of the pixel point.

In some embodiments, the processing device 112 may determine distance information of the pixel point based on the updated position feature vector of the pixel point. In some embodiments, the processing device 112 may use the box regression layer of the detection model to perform a bounding box regression operation on each of the update position feature vectors of the pixel point corresponding to the one or more categories to determine the distance information of the pixel point. In some embodiments, the bounding box regression operation may include a projective transformation.

In some embodiments, the distance information may indicate a distance between the pixel point in the detection image corresponding to the pixel point in the feature image and the bounding box thereof. The distance information may reflect the distance between the pixel point in the detection image corresponding to the pixel point in the feature image and a predicted bounding box. In some embodiments, the distance information may reflect distances between the pixel point in the detection image corresponding to the pixel point in the feature image and the four sides of the predicted bounding box.

In some embodiments, the distance information may be represented as $(l^*, t^*, r^*, b^*)$, wherein $l^*$ represents the distance between the pixel point in the detection image corresponding to the pixel point in the feature image and the left side of the predicted bounding box, $t^*$ represents the distance between the pixel point in the detection image corresponding to the pixel point in the feature image and the left side of the predicted bounding box, $r^*$ represents the distance between the pixel point in the detection image corresponding to the pixel point in the feature image and the upper side of the predicted bounding box, $b^*$ represents the distance between the pixel point in the detection image corresponding to the pixel point in the feature image and the downside of the predicted bounding box.

In some embodiments, the processing device 112 may determine the distance information of the pixel point in the detection image corresponding to the pixel point in the feature image based on the following formula (2):

$$(l^*, t^*, r^*, b^*) = g(k * F_b + (1 - k) * u(BR\text{–}buffer)), \qquad (2)$$

where $(l, t^*, r^*, b^*)$ represents the distance information, k refers to a weight coefficient, $F_b$ refers to the position feature vector, $BR$-buffer refers to the reference position feature vector, $u(\cdot)$ refers to flattering B*H*W into B*(n*M)*H*W, that is, transforming the reference position feature vectors of the one or more categories (e.g., n categories) into a vector of B*(n*M)*H* W, $g(\cdot)$ represents a projection transformation. In some embodiments, the processing device 112 may determine the updated position feature vector of the pixel point based on the result of $k * F_b + (1 - k) * u(BR\text{-}buffer)$.

In some embodiments, the box regression layer may include formula (2). In some embodiments, the weight coefficient k may be specifically set according to the actual needs. The weight coefficient k may be a value ranging from 0 to 1. In some embodiments, the weight coefficient k may be greater than 0.5, for example, the weight coefficient k may be equal to 0.6 or 0.8, or the like. By setting the weight coefficient k to a value greater than 0.5, the impact of the reference position feature vectors on the updated position feature vector may be less than that of the position feature vector on the updated position feature vector, thereby improving the reliability of the updated position feature vector.

In some embodiments, the processing device112 may determine the position corresponding to a pixel point based on the distance information. As described above in operation 530, the position corresponding to a pixel point may be displayed by a bounding box surrounding the object (or target), whereby, according to the distance information of the pixel point, the width of the predicted bounding box of the pixel point is $(l^*+r^*)$ and the height is $(t^*+b^*)$, thereby determining the position corresponding to a pixel point.

In some embodiments, the position feature vector of the pixel point may be updated based on the reference position feature vectors corresponding to the one or more categories, thereby determining the position corresponding to a pixel point using the update position feature vector, so that the position determined by the detection model may be more accurate.

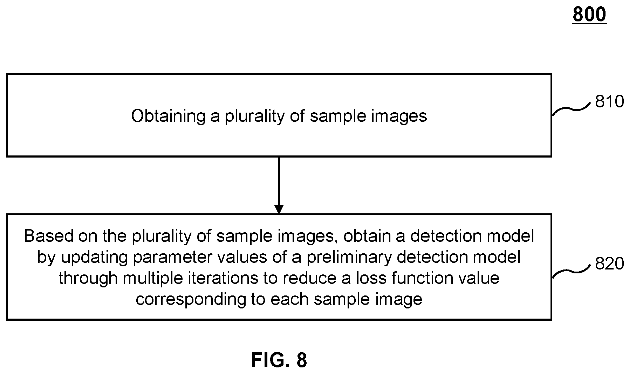

FIG. 8 is a flowchart illustrating an exemplary process for training a detection model according to some embodiments of the present disclosure. In some embodiments, process 800 may be executed by the image detection system 100. For example, the process 800 may be implemented as a set of instructions (e.g., an application) stored in a storage device (e.g., the storage device 140, the ROM 230, the RAM 240, and/or the storage 390). In some embodiments, the processing device 112 (e.g., the processor 220 of the computing device 200, the CPU 340 of the mobile device 300, and/or one or more modules illustrated in FIG. 4B) may execute the set of instructions and may accordingly be directed to perform the process 800. The operations of the illustrated process presented below are intended to be illustrative. In some embodiments, the process 800 may be accomplished with one or more additional operations not described and/or without one or more of the operations discussed. Additionally, the order of the operations of process 800 illustrated in FIG. 8 and described below is not intended to be limiting.

In 810, the processing device 112 may obtain a plurality of sample images. Each of at least a portion of sample images may include one or more labels. The one or more labels of a sample image may be configured to characterize a category or a position of each of at least one sample object in the sample image. In some embodiments, operation 810 may be performed by the acquisition module 401.

In some embodiments, the sample images may be used to train a preliminary detection model to obtain a trained detection model (also referred to the detection model). The preliminary detection model may include a machine learning model that has never been trained or a trained learning model that has been trained using a training set including sample images that are at least partially different from the plurality of sample images.

In some embodiments, the label used to characterize a category of an object in a sample image may also be referred to as a category label. In some embodiments, objects in sample images of the same category may be labeled with the same category label; objects in sample images of the different categories may be labeled with different category labels. In some embodiments, if objects in sample images of the different categories are labeled with different category labels, the detection model trained based on the small images may be available for recognizing different categories of objects. In some embodiments, the label used to characterize a position of an object in a sample image may also be referred to as a position label.

In some embodiments, the position label may be represented by a bounding box that surrounds the object. For example, the bounding box may include a rectangle box that may include the boundary of a sample object in a sample image. A bounding box may refer to a box enclosing an object of interest (which is detected by the detection model) in the detection image. In some embodiments, a bounding box may have any shape. For example, the bounding box may have the shape of a square, a rectangle, a triangle, a polygon, a circle, an ellipse, an irregular shape, or the like. In some embodiments, the bounding box may be a minimum bounding box that has a preset shape (e.g., a rectangle, a square, a polygon, a circle, an ellipse) and encloses an object of interest in the detection image.

In some embodiments, partial objects in the plurality of sample images may be labeled (e.g., the category label and the position label). In some embodiments, partial objects in the each of the plurality of sample images may be labeled. For example, there are 1000 objects included in the sample images, and only 100 objects may be labeled with the category label and the position label, and other objects may be not labeled. In some embodiments, the objects in sample images may be labeled manually. In some embodiments, the processing device 112 may obtain the sample images from storage (e.g., the storage device 140, the storage module 405) or database.

In some embodiments, a sample image with one or more labels may also be referred to as a positive sample, and a sample image without a label may also referred to as a negative sample. In some embodiments, a count of positive samples in the plurality of sample images may be less than a count of negative samples in the plurality of sample images. In some embodiments, the positive samples may be the first portion of the plurality of sample images, and the negative samples may be the second portion of the plurality of sample images.

In 820, based on the plurality of sample images, the processing device 112 may obtain a detection model by updating parameter values of a preliminary detection model through multiple iterations to reduce a loss function value corresponding to each sample image. In some embodiments, operation 820 may be performed by the parameter adjustment module 403.

In some embodiments, the preliminary detection model and the detection model have the same structure. In some embodiments, the preliminary detection model may include multiple portions. For example, multiple portions may include a feature extraction portion, a recognition portion, a box regression portion, etc. The feature extraction portion may include a feature extraction network, and the feature extraction portion may extract features of an inputted sample image to obtain a sample feature vector of each of at least one sample pixel point in a sample feature image. The recognition portion may include a classification layer and a compute layer. The recognition portion may determine the predicted category of the at least one sample pixel point. The box regression portion may include a box regression layer, and the box regression portion may determine the predicted position of the at least one sample pixel point. More descriptions regarding the structure of the detection model may be found elsewhere in the present disclosure. See, e.g., FIG. 5 and relevant descriptions thereof.

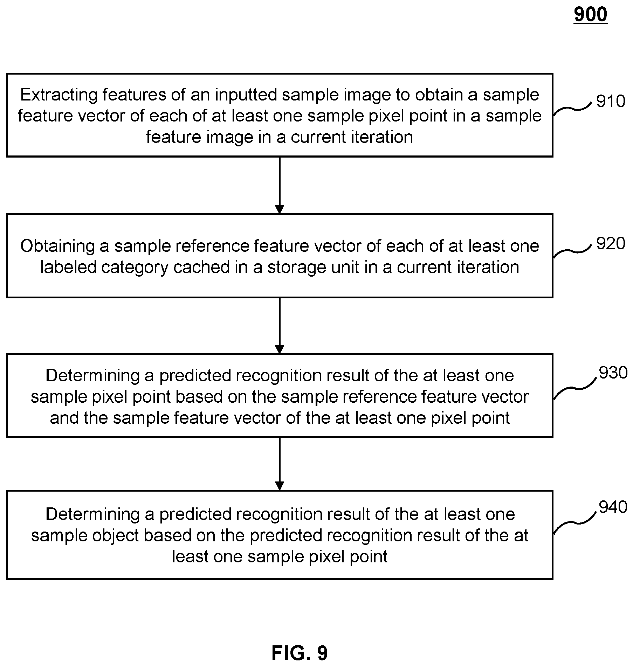

During the training, the parameter adjustment module 430 may update the parameter values of the preliminary detection model based on an inputted sample image in each iteration of the multiple iterations. Specifically, the parameter adjustment module 430 may adjust the parameter values of the preliminary detection model to reduce the loss function value corresponding to each sample image generated in each iteration so that the loss function value satisfies a preset condition. For example, the loss function value converges, or the loss function value is less than the preset value. When the loss function meets the preset conditions, the model training is completed to obtain a well-trained testing model. The well-trained detection model may determine the category and position of at least one object (or target) in the image based on the detection image. More descriptions regarding the loss function value may be found elsewhere in the present disclosure. See, e.g., FIG.9 and relevant descriptions thereof.

FIG. 9 is a flowchart illustrating an exemplary process for determining a loss function value in a current iteration of the training of a detection model according to some embodiments of the present disclosure. In some embodiments, process 900 may be executed by the image detection system 100. For example, the process 900 may be implemented as a set of instructions (e.g., an application) stored in a storage device (e.g., the storage device 140, the ROM 230, the RAM 240, and/or the storage 390). In some embodiments, the processing device 112 (e.g., the processor 220 of the computing device 200, the CPU 340 of the mobile device 300, and/or one or more modules illustrated in FIG. 4B) may execute the set of instructions and may accordingly be directed to perform the process 900. The operations of the illustrated process presented below are intended to be illustrative. In some embodiments, the process 900 may be accomplished with one or more additional operations not described and/or without one or more of the operations discussed. Additionally, the order of the operations of process 900 illustrated in FIG. 9 and described below is not intended to be limiting.

In 910, the processing device 112 may extract features of an inputted sample image to obtain a sample feature vector of each of at least one sample pixel point in a sample feature image in a current iteration. In some embodiments, operation 910 may be performed by the parameter adjustment module 403.

In some embodiments, a sample feature image may be obtained by the processing device 112 using a feature extraction network to extract features from the sample image. In some embodiments, the sample feature vector may include a sample classification feature vector and a sample position feature vector. In some embodiments, the sample classification feature vector is obtained in the same way as the classification feature vector, and the sample position feature vector is obtained in the same way as the position feature vector. More descriptions regarding the classification feature vector and the position feature vector may be found elsewhere in the present disclosure. See, e.g., operation 510 and relevant descriptions thereof.

In 920, the processing device 112 may obtain a sample reference feature vector of each of at least one labeled category cached in a storage unit in a current iteration. In some embodiments, operation 920 may be performed by the parameter adjustment module 403.

In some embodiments, the sample reference feature vector may include a sample reference classification feature vector corresponding to the sample classification feature vector and a sample reference position feature vector corresponding to the sample position feature vector. In the training process of the model, the processing device 112 may determine the sample reference feature vector of at least one labeled category in the current iteration by updating the reference feature vector in the previous iteration of the current iteration corresponding to the different label categories cached in the storage unit based on the feature vectors of the target sample pixel points of different label categories extracted in the current iteration. More descriptions regarding obtaining the sample reference feature vector of at least one labeled category in the current iteration may be found elsewhere in the present disclosure. See, e.g., FIG. 11 and relevant descriptions thereof.

In 930, the processing device 112 may determine a predicted recognition result of the at least one sample pixel point based on the sample reference feature vector and the sample feature vector of the at least one pixel point. In some embodiments, operation 930 may be executed by the parameter adjustment module 403.

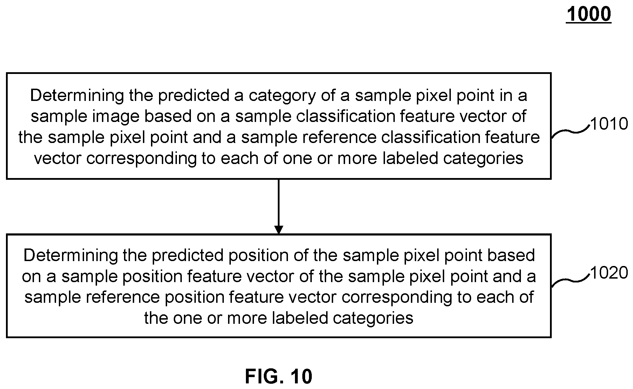

In some embodiments, the predicted recognition result includes a predicted category and a predicted position. In some embodiments, operation 930 may be similar to operation 530. For example, the predicted recognition result in operation 930 may be generated by the preliminary detection model with parameter values generated in the previous iteration. The recognition result of the pixel point in operation 530 may be performed may be generated by the detection model with parameter values generated after the multiple iterations for training the preliminary detection model is terminated. More descriptions regarding operation 930 may be found elsewhere in the present disclosure. See, e.g., operation 530, FIG. 10, and relevant descriptions thereof.

In 940, the processing device 112 may determine a predicted recognition result of the at least one sample object based on the predicted recognition result of the at least one sample pixel point. In some embodiments, operation 940 may be executed by the parameter adjustment module 430.

Operation 940 may be similar to operation 540. More descriptions regarding operation 940 may be found elsewhere in the present disclosure. See, e.g., operation 540 and relevant descriptions thereof.

In 950, the processing device 112 may determine the loss function value at least based on a difference between the predicted recognition result of the at least one sample object and the label of the sample image. The label of the sample image may indicate an actual category and/or position of the at least one sample object. The loss function value may indicate a recognition error of the preliminary detection model with parameter values generated or updated in the previous iteration. In some embodiments, operation 950 may be performed by the parameter adjustment module 403.

FIG. 10 is a flowchart illustrating an exemplary process for determining a predicted recognition result of at least one sample pixel point according to some embodiments of the present disclosure. In some embodiments, process 1000 may be executed by the image detection system 100. For example, the process 500 may be implemented as a set of instructions (e.g., an application) stored in a storage device (e.g., the storage device 140, the ROM 230, the RAM 240, and/or the storage 390). In some embodiments, the processing device 112 (e.g., the processor 220 of the computing device 200, the CPU 340 of the mobile device 300, and/or one or more modules illustrated in FIG. 4B) may execute the set of instructions and may accordingly be directed to perform the process 1000. The operations of the illustrated process presented below are intended to be illustrative. In some embodiments, the process 1000 may be accomplished with one or more additional operations not described and/or without one or more of the operations discussed. Additionally, the order of the operations of process 1000 illustrated in FIG. 10 and described below is not intended to be limiting. Operation 930 in FIG. 9 may be performed according to process 1000.

In 1010, the processing device 112 may determine the predicted a category of a sample pixel point in a sample image based on a sample classification feature vector of the sample pixel point and a sample reference classification feature vector corresponding to each of one or more labeled categories. In some embodiments, step 1010 may be executed by the parameter adjustment module 403.

In some embodiments, the processing device 112 may determine sample initial category information of the sample pixel point based on the sample classification feature vector of the sample pixel point, determine a similarity degree between the sample classification feature vector of the sample pixel and the sample reference classification feature vector corresponding to each of the one or more labeled categories, and determine the predicted category (also referred to as a target category) of the sample pixel based on the sample initial category information and the sample similarity degree. More descriptions regarding the predicted category of the at least one sample pixel point may be found elsewhere in the present disclosure. See, e.g., step 710 and relevant descriptions thereof.

Step 1020, the processing device 112 may determine the predicted position of the sample pixel point based on a sample position feature vector of the sample pixel point and a sample reference position feature vector corresponding to each of the one or more labeled categories. In some embodiments, step 1020 may be executed by the parameter adjustment module 403.

In some embodiments, the processing device 112 may determine a sample updated position feature vector of the sample pixel point based on the sample position feature vector of the pixel point and the sample reference position feature vector corresponding to each of the one or more labeled categories. In some embodiments, the processing device 112 may determine sample distance information of the sample pixel point based on the sample updated position feature vector of the sample pixel point.

In some embodiments, the sample distance information may indicate a distance between the sample pixel point in the sample image corresponding to the pixel point in the sample feature image and the predicted bounding box thereof.

In some embodiments, the processing device 112 may determine the predicted position of the sample pixel point in the sample image corresponding to the pixel point in the sample feature image based on the sample distance information. More descriptions regarding determining the predicted position of at least one sample pixel point may be found elsewhere in the present disclosure. See, e.g., step 720 and relevant descriptions thereof.

It should be noted that the training of the model corresponds to the application of the model. Therefore, the same information and the same operations related to pixel points and sample pixel points in FIGS. 8-10 and FIGS. 5-7 may be expressed in the same way. For example, the classification feature vectors of at least one pixel point and the sample classification feature vectors of at least one sample pixel point may both be represented as $F_c$, and $F_c$ may be a (B*N*H*W) vector.

FIG. 11 is a flowchart illustrating an exemplary process for obtaining a sample reference feature vector corresponding to a labeled category in a current iteration of the training of a detection model according to some embodiments of the present disclosure. In some embodiments, process 1100 may be executed by the image detection system 100. For example, the process 1100 may be implemented as a set of instructions (e.g., an application) stored in a storage device (e.g., the storage device 140, the ROM 230, the RAM 240, and/or the storage 390). In some embodiments, the processing device 112 (e.g., the processor 220 of the computing device 200, the CPU 340 of the mobile device 300, and/or one or more modules illustrated in FIG. 4B) may execute the set of instructions and may accordingly be directed to perform the process 1100. The operations of the illustrated process presented below are intended to be illustrative. In some embodiments, the process 1100 may be accomplished with one or more additional operations not described and/or without one or more of the operations discussed. Additionally, the order of the operations of process 1100 illustrated in FIG. 11 and described below is not intended to be limiting.

In 1110, the processing device 112 may determine multiple target sample pixel points in a sample feature image that satisfies a preset condition. In some embodiments, operation 1110 may be performed by the parameter adjustment module 403. The sample feature image may be generated by extracting features from a sample image that is inputted into a preliminary detection model in a current iteration.

In some embodiments, the preset condition may be set according to the actual needs. In some embodiments, the preset condition may include that the degree of overlap between a predicted position (e.g., a predicted bounding box) corresponding to the target sample pixel points in the sample feature image and a labeled position (e.g., a labeled bounding box) of a sample object in the sample image is higher than a threshold.

In some embodiments, the processing device 112 may determine the degree of overlap between the two by determining the intersection-over-union (IoU) between the predicted position (e.g., a predicted bounding box) and the label position (e.g., a labeled bounding box). The IoU may be the ratio of the intersection between the predicted bounding box and the labeled bounding box and the union between the predicted bounding box and the labeled bounding box. It may be understood that the greater the ratio, the higher the degree of overlap between the predicted bounding box and the labeled bounding box may be. In some embodiments, the value of the ratio ranges from 0 to 1.

In some embodiments, the processing device 112 may determine the degree of overlap exceeding the threshold corresponding to pixel point as a target pixel point. In some embodiments, the threshold may be set according to the actual needs. For example, the threshold may be 0.9, 0.95, or the like.

In 1120, based on sample classification feature vectors of the target sample pixel points corresponding to different labeled categories in the current iteration, the processing device 112 may determine the sample reference classification feature vector corresponding to the at least one labeled category in the current iteration by updating the sample reference classification feature vector corresponding to different labeled categories generated and used in a previous iteration and cached in a storage unit. In some embodiments, operation 1120 may be performed by the parameter adjustment module 403.

In some embodiments, the sample classification feature vector of the target sample pixel point may be obtained from the sample classification feature image of the current iteration. More descriptions regarding obtaining the sample classification feature images may be found elsewhere in the present disclosure. See, e.g., operation 810 and relevant descriptions thereof.

In some embodiments, the update of the sample reference classification feature vector in the current iteration may be performed by performing a weighted operation on the sample classification feature vector of the target sample pixel point and the sample reference classification feature vector in the current iteration. For example, the weighted operation may include a weighted summation, a weighted averaging, etc. In some embodiments, the processing device 112 may determine the reference classification feature vector corresponding to a labeled category in the current iteration by performing the weighted summation operation on the sample classification feature vectors of the target sample pixel points of the labeled category, and the sample reference feature vectors corresponding to the labeled category generated and cached in the previous iteration. For example, with the target sample pixel points A and B as an example, the target sample pixel points A and B may belong to categories 1 and 2. Then the processing device 112 may determine and/or cache the sample reference classification feature vector corresponding to category 1 in the current iteration by updating the sample reference classification feature vector corresponding to category 1 generated and cached in the storage unit in the previous iteration based on the sample classification feature vector of the target sample pixel point A in the current iteration. For example, the processing device may determine the reference classification feature vector corresponding to category 1 in the current iteration by performing the weighted summation operation on the sample classification feature vector of the target sample pixel point A and the sample reference feature vector corresponding to the category 1 generated and cached in the previous iteration. The processing device 112 may determine and/or cache the sample reference classification feature vector corresponding to category 2 in the current iteration by updating the sample reference classification feature vector corresponding to category 2 used in the previous iteration based on the sample classification feature vector of the target sample pixel point B. For example, the processing device 112 may determine the reference classification feature vector corresponding to category 2 in the current iteration by performing the weighted summation operation on the sample classification feature vector of the target sample pixel point B and the sample reference feature vector corresponding to the category 2 generated and used in the previous iteration. By analogy, the aforementioned update may be performed based on the target sample pixel points of the n labeled categories, and the sample reference classification feature vector of at least one labeled category in the current iteration may be determined.

In some embodiments, if the labeled category of the target sample pixel point is L, the current iteration is the jth round, and the processing device 112 may obtain a sample reference classification feature of the labeled category L corresponding to the jth round based on the following formula (3):

$$f_{c_{L,j}} = \lambda f_{c_{L,j-1}} + (1 - \lambda)F_{c_p}, \qquad (3)$$

where $f_{c_{L,j}}$ refers to the sample reference classification feature vector corresponding to the labeled category L in the jth round (i.e., the current iteration), $\lambda$ refers to a weight coefficient, $f_{c_{L,j-1}}$ refers to the sample reference classification feature vector corresponding to the labeled category L in the j-1th round (i.e., the previous iteration), $F_{c_p}$ refers to the sample classification feature vector of the target sample pixel point in the current iteration. In some embodiments, the weight coefficient $\lambda$ may be set according to the actual needs. The weight coefficient $\lambda$ may be a value ranging from 0 to 1. In some embodiments, the weight coefficient $\lambda$ may be greater than 0.5, for example, 0.9 or 0.99, or the like. By setting the weight coefficient X to a larger value, the impact of every iteration may be smaller, ensuring the reliability of the model.

In some embodiments, the processing device 112 may cache the sample reference classification feature vector of at least one labeled category in the current iteration to the storage unit and update the sample reference classification feature vector used in the current iteration to determine the sample reference classification feature vector used in the next iteration until the training of the preliminary detection model is finished. The sample reference classification feature vector that is updated in the last iteration of the training process may be used for the application of the trained preliminary detection model (i.e., the detection model).

In some embodiments, by caching the sample reference classification feature vector in each iteration, when the processing device 112 determines the sample reference classification feature vector in the current iteration, the processing device 112 may directly obtain the sample reference feature vector in the previous iteration of the current iteration from the storage unit, and perform corresponding update operations to determine the sample reference classification feature vector in the current iteration, and cache the sample reference feature vector determined in the current iteration into the storage unit for next iteration.

In some embodiments, the processing device 112 may update the sample reference classification feature vector in the previous iteration of the current iteration corresponding to each of the n label categories based on formula (3), and obtain the sample reference classification feature vector of at least one labeled category in the current iteration.

In 1130, based on sample position feature vectors of the target sample pixel points corresponding to different labeled categories in the current iteration, the processing device 112 may determine the sample reference position feature vector corresponding to the at least one labeled category in the current iteration by updating the sample reference position feature vectors corresponding to different labeled categories generated and used in a previous iteration and cached in a storage unit. In some embodiments, operation 1130 may be performed by the parameter adjustment module 403.

Similar to step 1120, in some embodiments, if the labeled category of the target sample pixel point is L, the current iteration is the jth round, and the processing device 112 may obtain a sample reference position feature of the labeled category L corresponding to the jth round based on the following formula (4):

$$f_{br_{L,j}} = \beta f_{br_{L,j-1}} + (1 - \beta)F_{br_p}, \qquad (4)$$

where $f_{br_{L,j}}$ refers to the sample reference position feature vector corresponding to the labeled category L in the jth round (i.e., the current iteration), $\beta$ refers to a weight coefficient, $f_{br_{L,j-1}}$ refers to the sample reference position feature vector corresponding to the labeled category L in the j-1th round (i.e., the previous iteration), $F_{br_p}$ refers to the sample position feature vector of the target sample pixel point in the current iteration.

In some embodiments, the weight coefficient $\beta$ may be set according to the actual needs. The weight coefficient $\beta$ may be a value ranging from 0 to 1. In some embodiments, the weight coefficient $\beta$ may be greater than 0.5, for example, 0.9 or 0.99, or the like. By setting the weight coefficient $\beta$ to a larger value, the impact of every iteration may be smaller, ensuring the reliability of the model.

In some embodiments, the processing device 112 may cache the sample reference position feature vectors of at least one labeled category in the current iteration to the storage unit and update the sample reference position feature vector in the current iteration to determine and cache the sample reference position feature vectors of at least one labeled category in the next iteration until the training of the preliminary detection model is finished. The sample reference position feature vector that is updated in the last iteration of the training process may be used to the application of the trained preliminary detection model (i.e., the detection model).

By caching the sample reference position feature vector, when the processing device 112 determines the sample reference position vector in the next iteration of the current iteration, the processing device 112 may obtain sample reference position feature vector cached in the current iteration from the storage unit and update the sample reference position feature vector in the current iteration to determine and cached the sample reference position feature vector in the next iteration.

In some embodiments, the processing device 112 may update the sample reference position feature vector corresponding to each of the n labeled categories in the previous iteration to obtain the sample reference position feature vector corresponding to at least one of the n labeled categories in the current iterations.

In some embodiments, the processing device 112 may designate the sample reference classification feature vector of at least one labeled category in the current iteration when the training of the detection model is completed as the reference classification feature vector of the at least one category, and designate the sample reference position feature vector of at least one label category in the current iteration when the training of the detection model is completed as the reference position feature vector of the at least one category. In some embodiments, after determining the reference classification feature vector and the reference position feature vector of at least one category, the processing device 112 may store the reference classification feature vector and the reference position feature vector of the at least one category in the storage unit or other storage device (e.g., the storage device 140) for the application of the trained detection model.

In some embodiments of the present disclosure, based on the sample feature vector of the target sample pixels with the labeled category, the cached sample reference feature vector of the corresponding category may be updated according to the category in each iteration, so that the reference feature vector of at least one category obtained after the training of the detection model may indicate universal features of objects of the labeled category, and there is no need to perform a large number of manual fine annotations on sample images. And in the application of the detection model, the recognition result of at least one pixel may be determined based on the reference feature vector (i.e., the universal features), which improves the recognition accuracy of the detection model. And, the missed detection caused by unlabeled may be avoided, the recall rate and performance of the detection model may be improved, and the cost of labeling may be reduced.

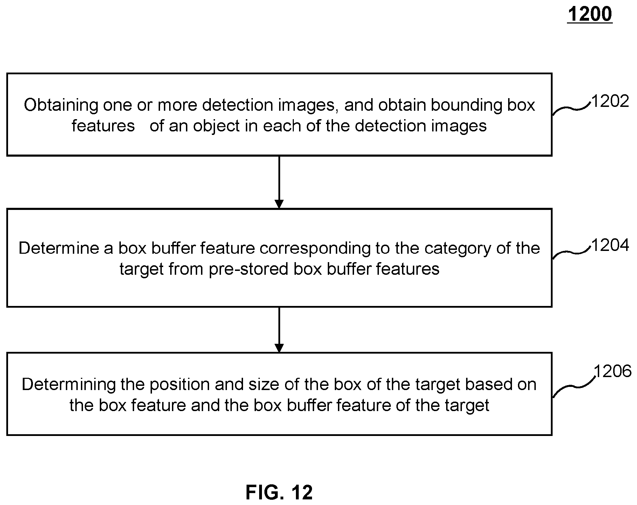

FIG. 12 is a flowchart illustrating another exemplary process for image detection according to some embodiments of the present disclosure. In some embodiments, process 1200 may be executed by the image detection system 100. For example, the process 1200 may be implemented as a set of instructions (e.g., an application) stored in a storage device (e.g., the storage device 140, the ROM 230, the RAM 240, and/or the storage 390). In some embodiments, the processing device 112 (e.g., the processor 220 of the computing device 200, the CPU 340 of the mobile device 300, and/or one or more modules illustrated in FIGs. 4A and 4B) may execute the set of instructions and may accordingly be directed to perform the process 12100. The operations of the illustrated process presented below are intended to be illustrative. In some embodiments, the process 1200 may be accomplished with one or more additional operations not described and/or without one or more of the operations discussed. Additionally, the order of the operations of process 1200 illustrated in FIG. 12 and described below is not intended to be limiting.

In 1202, the processing device 112 may obtain one or more detection images, and obtain bounding box features of an object in each of the detection images. As used herein, the object may be a target to be detected in the detection image.

More descriptions regarding the detection image may be found elsewhere in the present disclosure. See, e.g., operation 510 and relevant descriptions thereof.

In some embodiments, the processing device 112 may input a detection image into a feature extraction network of a detection model to obtain one or more feature images and one or more prediction points. In some embodiments, a prediction point may be a pixel point or a feature point. In some embodiments, the count of the prediction points may be equal to 1. In some embodiments, the dimension of a feature image may be denoted as (B*Z*H*W), denoted as F, where B represents the number of detection images input to the detection model; Z represents the length of a feature vector (or the number of channels of the feature image); H represents the height of the feature image, and W represents the width of the feature image.

In some embodiments, the feature extraction network may include a backbone network and a feature network. More descriptions regarding the backbone network may be found elsewhere in the present disclosure. See, e.g., operation 510 and relevant descriptions thereof.

In some embodiments, the processing device 112 may use the prediction point to regress the distance between the prediction point and the border of its bounding box to obtain the bounding box feature. In some embodiments, the processing device 112 may perform a bounding box regression operation on the feature vector of the prediction point in the feature image to obtain the bounding box feature. The bounding box regression operation may include a projection transformation operation. In some embodiments, the distance between the prediction point and the boundary of the bounding box may be expressed as (l, r, t, b), that is, the box feature.

In 1204, the processing device 112 may determine a box buffer feature corresponding to the category of the target from pre-stored box buffer features. The box buffer feature may identify distance information between the prediction point and an actual box of the target.

In some embodiments, the processing device 112 may analyze the category of the target based on the feature image. In some embodiments, the processing device 112 may use the SoftMax classification algorithm to classify the feature vectors of the feature image into several categories, such as n categories, the dimension of which is $B \times H \times W \times n$, denoted as S.

Further, the processing device 112 may extract the box buffer feature corresponding to the category of the target from the pre-stored box buffer features based on the classification result of the target. The box buffer feature may identify the distance information between the prediction point and the actual box of the target.

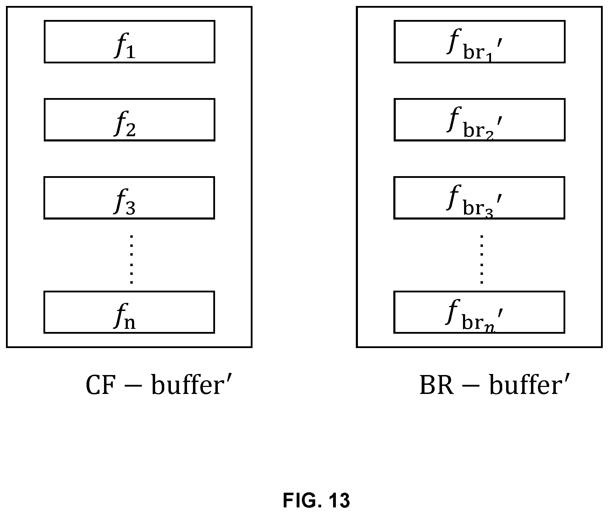

In some embodiments, the pre-stored box buffer features may be obtained in the training of the detection model using multiple sample images. The box features of the sample images may be extracted, separately, and then the box buffer features may be updated according to the box features of the multiple sample images to form. As shown in FIG. 13, the box buffer features may be denoted as BR_buffer', the dimension of each category of box buffer feature may be $n \times 4$, n represents the number of categories, and the feature vector length is 4.

In 1206, the processing device 112 may determine the position and size of the box of the target based on the box feature and the box buffer feature of the target.

In some embodiments, a target detection device (e.g., the processing device 112) may determine a prediction box of the target based on the box feature of the target and the pre-stored box buffer feature, and decodes the prediction box of the target to obtain the position and size through of the target, that is, the prediction point position is (x, y), the width and height of the box is (*l'+r', t'+b'*), and the position and size of the box of the target may be determined according to the following formula (5):

$$(l', t', r', b') = \text{k} \times (\text{l}, \text{r}, \text{t}, \text{b}) + (1 - \text{k}) \times \text{BR\_buffer}', \ (5)$$

where (l, r, t, b) is the box feature of the target, BR_buffer' is the pre-stored box buffer feature, and (*l', t', r', b'*) is the box feature of the predicted box of the target.

In some embodiment of the present disclosure, the target detection device may obtain the image to be detected (i.e., the detection image), and obtain the box feature of the target in the image to be detected, extract the box buffer feature corresponding to the target category from the prestored box buffer features, wherein the box buffer feature identifies the distance information between the prediction point and the actual box of the target, and calculate the position and size of the box of the target based on the box feature of the target and the box buffer feature. The above solution may improve the accuracy of image target detection.

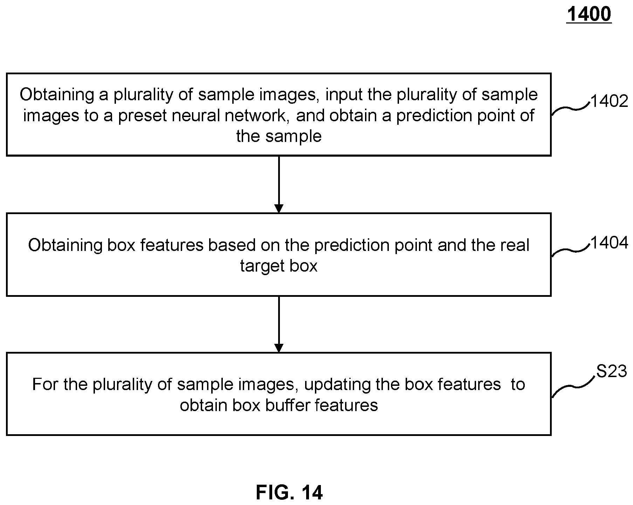

In the above-mentioned embodiment, the target detection device uses the pre-stored box buffer features to merge with the box feature of the target to obtain the final target prediction box. For the process of generating the pre-stored box buffer features, please refer to FIG. 14.

FIG. 14 is a flowchart illustrating another exemplary process for image detection according to some embodiments of the present disclosure. In some embodiments, process 1400 may be executed by the image detection system 100. For example, the process 1400 may be implemented as a set of instructions (e.g., an application) stored in a storage device (e.g., the storage device 140, the ROM 230, the RAM 240, and/or the storage 390). In some embodiments, the processing device 112 (e.g., the processor 220 of the computing device 200, the CPU 340 of the mobile device 300, and/or one or more modules illustrated in FIGs. 4A and 4B) may execute the set of instructions and may accordingly be directed to perform the process 1400. The operations of the illustrated process presented below are intended to be illustrative. In some embodiments, the process 1400 may be accomplished with one or more additional operations not described and/or without one or more of the operations discussed. Additionally, the order of the operations of process 1400 illustrated in FIG. 14 and described below is not intended to be limiting.

In 1402, the processing device 112 may obtain a plurality of sample images, input the plurality of sample images to a preset neural network, and obtain a prediction point of the sample.

More descriptions regarding the plurality of sample images may be found elsewhere in the present disclosure. See, e.g., operations 810 and 1201 and relevant descriptions thereof.

In 1404, the processing device 112 may obtain box features based on the prediction point and the real target box.

More descriptions regarding operation 1404 may be found elsewhere in the present disclosure. See, e.g., operation 1204 and relevant descriptions thereof.

In 1406, for the plurality of sample images, the processing device 112 may update the box features to obtain box buffer features.

In some embodiments, the processing device 112 may obtain the box features of each of the plurality of sample images, and continuously update the box features of the current sample image according to the order of the acquisition of the plurality of sample images, thereby obtaining the final box buffer features.

Specifically, updating the box feature may include acquiring the box features of a previous sample image that is inputted into the preset neural network in a previous iteration and the box features of a current sample image that is inputted into the preset neural network in a current iteration; superimposing the box features of the previous sample image and the box features of the current sample image according to first preset update weights to obtain the box buffer features, and traversing all the sample images and repeating the above operations of updating the box features until the final box buffer features are obtained.

For example, assume that the labeled category of objects (or targets) is L, $f_{br_L}'$ in the BR_buffer' may be updated through training to obtain the updated box buffer feature according to the specific formula as following (6):

$$f_{br_L}' = \beta f_{br_L}' + (1 - \beta)F_{br}, \qquad (6)$$

where $f_{br_L}'$ represents the box features of category L in BR_buffer' at the lower right corner of FIG. 13, $F_{br}$ represents the box feature of category L obtained from the feature network in the current iteration of the training process of the preset neural network, and $\beta$ is the weight coefficient.

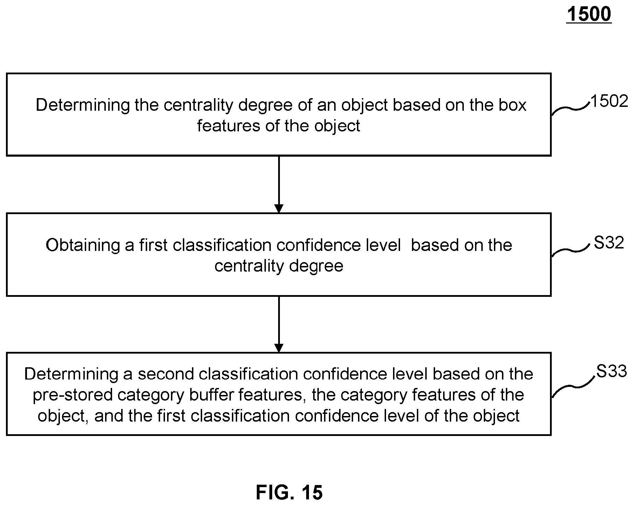

In the above-mentioned embodiment, a target detection device (e.g., the processing device 112) may extract the box buffer features corresponding to the labeled category of objects from the pre-stored box buffer features. On the one hand, the labeled category of objects may be determined according to the original output of SoftMax in the preset neural network (also referred to as a SoftMax neural network). Specifically, the target detection device may obtain the probability values of targets (o objects) belonging to different categories outputted by the SoftMax neural network of the preset neural network, and then use the category with the highest probability value as the detection target classification (i.e., the target category of objects). On the other hand, the category of an object may be determined according to the output after the reference centrality. Please refer to FIG. 15 for details.

FIG. 15 is a flowchart illustrating another exemplary process for image detection according to some embodiments of the present disclosure. In some embodiments, process 1500 may be executed by the image detection system 100. For example, the process 1500 may be implemented as a set of instructions (e.g., an application) stored in a storage device (e.g., the storage device 140, the ROM 230, the RAM 240, and/or the storage 390). In some embodiments, the processing device 112 (e.g., the processor 220 of the computing device 200, the CPU 340 of the mobile device 300, and/or one or more modules illustrated in FIGs. 4A and 4B) may execute the set of instructions and may accordingly be directed to perform the process 1500. The operations of the illustrated process presented below are intended to be illustrative. In some embodiments, the process 1500 may be accomplished with one or more additional operations not described and/or without one or more of the operations discussed. Additionally, the order of the operations of process 1500 illustrated in FIG. 15 and described below is not intended to be limiting.

In 1502, the processing device 112 may determine the centrality degree of an object based on the box features of the object.

In some embodiments, the target detection device (e.g., the processing device 112) may measure the centrality degree of the object based on the box features of the object. Specifically, the centrality degree may be determined according to formula (7) as follow:

$$\text{centrality degree} = \sqrt{\frac{\min(l',r')}{\max(l',t')} * \frac{\min(t',b')}{\max((t',b')}}, \tag{7}$$

where the centrality degree represents the centrality degree of the object, and the dimension of the centrality degree is $B \times H \times W \times 1$.

In 1504, the processing device 112 may obtain a first classification confidence level based on the centrality degree.

In 1506, the processing device 112 may determine a second classification confidence level based on the pre-stored category buffer features, the category features of the object, and the first classification confidence level of the object.

In some embodiments, after obtaining the box features of the object, the target detection device may determine the second classification confidence level of the object. The target detection device may determine the second classification confidence level based on the pre-stored category buffer features, the category features of the object, and the first classification confidence level of the object. The first classification confidence level and the second classification confidence level may be determined according to formulas (8) and (9) as follow:

$$score' = m * S'' + (1 - m) * F * CF - buffer', \tag{8}$$

$$S'' = (S' * centrality\ degree), \tag{9}$$

where $S'$ is the category features of the object, $CF - buffer'$ is the pre-stored category buffer features, $S''$ is the first classification confidence level, $score'$ is the second classification confidence level.

The determination of the second classification confidence level $score'$ may avoid the missed detection that is not manually labeled. In some embodiments of the present disclosure, the category features of an object may be multiplied with the category buffer features to determine the similarity degrees between the category features and the category buffer features corresponding to different categories. The higher the multiplication value, the more similar the category features of the object to the category buffer features corresponding to a category. Finally, the similarity degree may be added to the first classification confidence level $S'$ to determine the final second classification confidence level $score'$.

In some embodiments, the obtaining of the pre-stored category buffer features may be basically the same as the obtaining of the pre-stored box buffer features.

In some embodiments, the processing device 112 may obtain a plurality of sample images, and the sample images may be pre-processed before inputted to the feature extracting network to obtain the feature image. The processing device 112 may extract the category features corresponding to of the label according to the feature image.

The processing device 112 may separately obtain the category features of each of the multiple sample images, and continuously update the category features of the current sample image according to the obtaining order to obtain the final category buffer feature. As shown in FIG. 13, the category buffer feature stored in a $CF - buffer'$, and the $CF - buffer'$ may include an $(n \times Z)$ vector, wherein n represents the number of categories, Z represents the length of the feature vector. The category buffer feature vector of each category may be represented as $f_i$, an $(1*Z)$ vector, wherein i represents a category i, i=1,2, ..., n.

Specifically, the step of updating the category feature may be as follows: obtaining the category feature of the previous sample image and the category feature of the current sample image, superimposing the category feature of the previous sample image and the category feature of the current sample image according to the second preset update weight to obtain the category buffer feature, traversing all the sample images and repeat the above steps of updating the category features until the final category buffer feature is obtained.

For example, assume that the category of the target label is L, the feature vector of the prediction point is Fp, updating $f_L$ in the *CF - buffer'* through training to obtain the category buffer feature, the specific calculation formula is as follow (10):

$$f_L = \lambda f_L + (1-\lambda)*\, Fp \qquad\qquad (10)$$

Among them, $\lambda$ represents the weight coefficient.

In 1508, the processing device 112 may determine the category of the object based on the second classification confidence level.

In some embodiments, the processing device 112 may determine the category of the object based on the second classification confidence level. Specifically, the processing device 112 may compare the second classification confidence levels corresponding to the plurality of categories, and determine the category corresponding to the second classification confidence level of the maximum value as the target category of the object.

Having thus described the basic concepts, it may be rather apparent to those skilled in the art after reading this detailed disclosure that the foregoing detailed disclosure is intended to be presented by way of example only and is not limiting.

Moreover, certain terminology has been used to describe embodiments of the present disclosure. For example, the terms "one embodiment," "an embodiment," and/or "some embodiments" mean that a particular feature, structure or characteristic described in connection with the embodiment is included in at least one embodiment of the present disclosure. Therefore, it is emphasized and should be appreciated that two or more references to "an embodiment" or "one embodiment" or "an alternative embodiment" in various portions of this specification are not necessarily all referring to the same embodiment. Furthermore, the particular features, structures or characteristics may be combined as suitable in one or more embodiments of the present disclosure.

Further, it will be appreciated by one skilled in the art, aspects of the present disclosure may be illustrated and described herein in any of a number of patentable classes or context including any new and useful process, machine, manufacture, or comlocation of matter, or any new and useful improvement thereof. Accordingly, aspects of the present disclosure may be implemented entirely hardware, entirely software (including firmware, resident software, micro-code, etc.) or combining software and hardware implementation that may all generally be referred to herein as a "unit," "module," or "system." Furthermore, aspects of the present disclosure may take the form of a computer program product embodied in one or more computer readable media having computer-readable program code embodied thereon.

A computer readable signal medium may include a propagated data signal with computer readable program code embodied therein, for example, in baseband or as part of a carrier wave. Such a propagated signal may take any of a variety of forms, including electromagnetic, optical, or the like, or any suitable combination thereof. A computer readable signal medium may be any computer readable medium that is not a computer readable storage medium and that may communicate, propagate, or transport a program for use by or in connection with an instruction execution system, apparatus, or device. Program code embodied on a computer readable signal medium may be transmitted using any appropriate medium, including wireless, wireline, optical fiber cable, RF, or the like, or any suitable combination of the foregoing.

Computer program code for carrying out operations for aspects of the present disclosure may be written in a combination of one or more programming languages, including an object oriented programming language such as Java, Scala, Smalltalk, Eiffel, JADE, Emerald, C++, C#, VB. NET, Python or the like, conventional procedural programming languages, such as the "C" programming language, Visual Basic, Fortran 2003, Perl, COBOL 2002, PHP, ABAP, dynamic programming languages such as Python, Ruby, and Groovy, or other programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider) or in a cloud computing environment or offered as a service such as a Software as a Service (SaaS).

Furthermore, the recited order of processing elements or sequences, or the use of numbers, letters, or other designations thereof, are not intended to limit the claimed processes and methods to any order except as may be specified in the claims. For example, although the implementation of various components described above may be embodied in a hardware device, it may also be implemented as a software only solution, e.g., an installation on an existing server or mobile device.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various embodiments. This method of disclosure, however, is not to be interpreted as reflecting an intention that the claimed subject matter requires more features than are expressly recited in each claim. Rather, claimed subject matter may lie in less than all features of a single foregoing disclosed embodiment.

**Claims**

1. A method implemented on a computing device, the computing device including a processor and a storage device, the method including:

   inputting a detection image into a detection model; and
   obtaining a recognition result of an object in the detection image using the detection model, wherein the recognition result comprises a category and a position, and the obtaining a recognition result of an object in the detection image using the detection model includes:

   extracting features of the detection image to obtain a feature vector of each of at least one pixel point, wherein the feature vector comprises a classification feature vector and a position feature vector;
   obtaining a reference feature vector corresponding to each of one or more categories stored in the storage device, wherein the reference feature vector comprises a reference classification feature vector corresponding to the classification feature vector and a reference position feature vector corresponding to the position feature vector;
   determining, based on the reference feature vector and the feature vector of the pixel point, a recognition result of the pixel point, including:

   determining the category of the pixel point based on the classification feature vector of the pixel point and the reference classification feature vector corresponding to each of the one or more categories; and
   determining the position of the pixel point based on the position feature vector of the pixel point and the reference position feature vector corresponding to each of the one or more categories; and
   determining, based on the recognition result of the pixel point, a recognition result of the object.

2. The method of claim 1, wherein the method further includes:

   determining a centrality degree of the object based on the box features of the object;
   determining, based on the centrality degree, a first classification confidence level;
   determining, based on pre-stored category buffer features, category features of the object, and the first classification confidence level, a second classification confidence level; and
   determining, based on the second classification confidence level, a category of the object.

3. The method of claim 1, wherein the determining the category of the pixel point based on the classification feature vector of the pixel point and the reference classification feature vector corresponding to each of the one or more categories includes:

   determining initial category information of the pixel point based on the classification feature vector of the pixel point;
   determining a similarity degree between the classification feature vector of the pixel point and the reference classification feature vector corresponding to each of the one or more categories; and
   determining the category of the pixel point based on the initial category information and the similarity degree.

4. The method of claim 1 or claim 3, wherein the determining the position of the pixel point based on the position feature vector of the pixel point and the reference position feature vector corresponding to each of the one or more categories includes:

   determining an updated position feature vector of the pixel point based on the position feature vector of the pixel point and the reference position feature vector corresponding to each of the one or more categories;
   determining distance information of the pixel point based on the updated position feature vector of the pixel point; the distance information indicating a distance between the pixel point and a bounding box of the pixel point;
   determining the position of the pixel point based on the distance information.

5. The method of any one of claims 1-4, wherein the reference feature vector corresponding to each of the one or more categories stored in the storage device is obtained in a training process of the detection model, and the training process includes:

obtaining a plurality of sample images including a first portion and a second portion, each sample image in the first portion including one or more labels, wherein the labels are configured to characterize at least one of a labeled category or a labeled position of each of one or more sample objects in the each sample image in the first portion; based on the plurality of sample images, updating parameter values of a preliminary detection model through multiple iterations to reduce a loss function value corresponding to the each sample image.

6. The method of claim 5, wherein a count of sample images in the first portion is less than a count of sample images in the second portion.

7. The method of claim 5 or claim 6, wherein the loss function value in a current iteration corresponding to a sample image is determined by operations including:

extracting features of the sample image to obtain a sample feature vector of each of at least one sample pixel point;
obtaining a sample reference feature vector corresponding to each of one or more labeled categories cached in a storage unit in a current iteration;
determining a predicted recognition result of the sample pixel point based on the sample reference feature vector and the sample feature vector of the sample pixel point;
determining a predicted recognition result of each of the one or more sample objects based on the predicted recognition result of the sample pixel point; and
determining the loss function value based on a difference between the predicted recognition result of the sample object and the labels of the sample image.

8. The method of claim 7, wherein the predicted recognition result comprises a predicted category and a predicted position, the sample feature vector comprises a sample classification feature vector and a sample position feature vector, the sample reference feature vector comprises a sample reference classification feature vector corresponding to the sample classification feature vector and a sample reference position feature vector corresponding to the sample position feature vector, the determining a predicted recognition result of the pixel point based on the sample reference feature vector and the sample feature vector of the sample pixel point includes:

determining the predicted category of the sample pixel point based on the sample classification feature vector and the sample reference classification feature vector; and
determining the predicted position of the sample pixel point based on the sample position feature vector and the sample reference position feature vector.

9. The method of claim 7 or claim 8, wherein the obtaining a sample reference feature vector corresponding to each of one or more labeled categories cached in a storage unit in the current iteration includes:

determining sample pixel points of different labeled categories in a sample image, the sample pixel points satisfying a condition;
based on sample classification feature vectors of the sample pixels, determining the sample reference classification feature vector corresponding to at least one of the one or more labeled categories in the current iteration by updating sample reference classification feature vectors corresponding to different labeled categories in a previous iteration of the current iteration;
based on the sample position feature vectors of the sample pixels of different labeled categories, determining the sample reference position feature vector corresponding to at least one of the one or more labeled categories in the current iteration by updating the sample reference position feature vectors corresponding to different labeled categories in the previous iteration of the current iteration.

10. The method of claim 9, wherein the condition includes that a degree of overlap between a predicted position corresponding to the sample pixel point and a labeled position in the sample image is higher than a threshold.

11. The method of claim 9 or claim 10, further including:
determining the sample reference classification feature vector and the sample reference position feature vector corresponding to at least one of the one or more labeled categories generated in an iteration when the training process is terminated as the reference feature vector corresponding to at least one of the one or more categories.

12. The method of claim 8, wherein the determining the predicted category of the sample pixel point based on the sample classification feature vector and the sample reference classification feature vector includes:

determining sample initial category information of the sample pixel point based on the sample classification feature vector of the sample pixel point;

determining a sample similarity degree between the sample classification feature vector and the sample reference classification feature vector corresponding to each of the one or more categories; and

determining the predicted category of the sample pixel point based on the sample initial category information and the sample similarity degree.

13. The method of claim 8, wherein the determining the predicted position of the sample pixel point based on the sample position feature vector and the sample reference position feature vector includes:

determining a sample updated position feature vector of the sample pixel point based on the sample position feature vector and the sample reference position feature vector corresponding to each of the one or more categories;

determining distance information of the sample pixel point based on the sample updated position feature vector of the sample pixel point; the sample distance information indicating a distance between the sample pixel point and a bounding box of the sample pixel point;

determining the predicted position of the sample pixel point based on the sample distance information.

14. A system, comprising:

at least one storage device including a set of instructions; and

at least one processor in communication with the at least one storage device, wherein when executing the set of instructions, the at least one processor is directed to perform operations including:

inputting a detection image into a detection model; and

obtaining a recognition result of an object in the detection image using the detection model, wherein the recognition result comprises a category and a position, and the obtaining a recognition result of an object in the detection image using the detection model includes:

extracting features of the detection image to obtain a feature vector of each of at least one pixel point, wherein the feature vector comprises a classification feature vector and a position feature vector;

obtaining a reference feature vector corresponding to each of one or more categories stored in the storage device, wherein the reference feature vector comprises a reference classification feature vector corresponding to the classification feature vector and a reference position feature vector corresponding to the position feature vector;

determining, based on the reference feature vector and the feature vector of the pixel point, a recognition result of the pixel point, including:

determining the category of the pixel point based on the classification feature vector of the pixel point and the reference classification feature vector corresponding to each of the one or more categories; and

determining the position of the pixel point based on the position feature vector of the pixel point and the reference position feature vector corresponding to each of the one or more categories; and

determining, based on the recognition result of the pixel point, a recognition result of the object.

15. A non-transitory computer readable medium, comprising executable instructions that, when executed by at least one processor, direct the at least one processor to perform a method, the method comprising:

inputting a detection image into a detection model; and

obtaining a recognition result of an object in the detection image using the detection model, wherein the recognition result comprises a category and a position, and the obtaining a recognition result of an object in the detection image using the detection model includes:

extracting features of the detection image to obtain a feature vector of each of at least one pixel point, wherein the feature vector comprises a classification feature vector and a position feature vector;

obtaining a reference feature vector corresponding to each of one or more categories stored in the storage device, wherein the reference feature vector comprises a reference classification feature vector corresponding to the classification feature vector and a reference position feature vector corresponding to the position feature vector;

determining, based on the reference feature vector and the feature vector of the pixel point, a recognition result of the pixel point, including:

determining the category of the pixel point based on the classification feature vector of the pixel point and the reference classification feature vector corresponding to each of the one or more categories; and

determining the position of the pixel point based on the position feature vector of the pixel point and the reference position feature vector corresponding to each of the one or more categories; and

determining, based on the recognition result of the pixel point, a recognition result of the object.

## Patentansprüche

1. Verfahren, das auf einer Rechenvorrichtung implementiert wird, wobei die Rechenvorrichtung einen Prozessor und eine Speichervorrichtung beinhaltet, wobei das Verfahren beinhaltet:

Eingeben eines Detektionsbildes in ein Detektionsmodell; und

Erhalten eines Erkennungsergebnisses eines Objekts im Detektionsbild unter Verwendung des Detektionsmodells, wobei das Erkennungsergebnis eine Kategorie und eine Position umfasst, und das Erhalten eines Erkennungsergebnisses eines Objekts im Detektionsbild unter Verwendung des Detektionsmodells beinhaltet:

Extrahieren von Merkmalen des Detektionsbildes, um einen Merkmalsvektor von jedem von mindestens einem Pixelpunkt zu erhalten, wobei der Merkmalsvektor einen Klassifizierungsmerkmalsvektor und einen Positionsmerkmalsvektor umfasst;

Erhalten eines Referenzmerkmalsvektors, der jeder der eine oder mehrere in der Speichervorrichtung gespeicherten Kategorien entspricht, wobei der Referenzmerkmalsvektor einen Referenzklassifizierungsmerkmalsvektor umfasst, der dem Klassifizierungsmerkmalsvektor entspricht, und einen Referenzpositionsmerkmalsvektor, der dem Positionsmerkmalsvektor entspricht;

Bestimmen eines Erkennungsergebnisses des Pixelpunkts basierend auf dem Referenzmerkmalsvektor und dem Merkmalsvektor des Pixelpunkts, das beinhaltet:

Bestimmen der Kategorie des Pixelpunkts basierend auf dem Klassifizierungsmerkmalsvektor des Pixelpunkts und dem Referenzklassifizierungsmerkmalsvektor, der jeder von der einen oder mehreren Kategorien entspricht; und

Bestimmen der Position des Pixelpunkts basierend auf dem Positionsmerkmalsvektor des Pixelpunkts und dem Referenzpositionsmerkmalsvektor, der jeder von der einen oder mehreren Kategorien entspricht; und

Bestimmen eines Erkennungsergebnisses des Objekts basierend auf dem Erkennungsergebnis des Pixelpunkts.

2. Verfahren nach Anspruch 1, wobei das Verfahren weiter beinhaltet:

Bestimmen des Zentralitätsgrades des Objekts basierend auf den Boxmerkmalen des Objekts;
Bestimmen einer ersten Klassifizierungskonfidenzstufe basierend auf dem Zentralitätsgrad;
Bestimmen einer zweiten Klassifizierungskonfidenzstufe basierend auf vorab gespeicherten Kategoriepuffermerkmalen, Kategoriemerkmalen des Objekts und der ersten Klassifizierungskonfidenzstufe; und
Bestimmen einer Kategorie des Objekts basierend auf der zweiten Klassifizierungskonfidenzstufe.

3. Verfahren nach Anspruch 1, wobei das Bestimmen der Kategorie des Pixelpunkts basierend auf dem Klassifizierungsmerkmalsvektor des Pixelpunkts und dem Referenzklassifizierungsmerkmalsvektor, der jeder von der einen oder mehreren Kategorien entspricht, beinhaltet:

Bestimmen anfänglicher Kategorieinformationen des Pixelpunkts basierend auf dem Klassifizierungsmerkmalsvektor des Pixelpunkts;

Bestimmen eines Ähnlichkeitsgrades zwischen dem Klassifizierungsmerkmalsvektor des Pixelpunkts und dem Referenzklassifizierungsmerkmalsvektor, der jeder von der einen oder mehreren Kategorien entspricht; und

Bestimmen der Kategorie des Pixelpunkts basierend auf den anfänglichen Kategorieinformationen und des Ähnlichkeitsgrades.

4. Verfahren nach Anspruch 1 oder Anspruch 3, wobei das Bestimmen der Position des Pixelpunkts basierend auf dem Positionsmerkmalsvektor des Pixelpunkts und dem Referenzpositionsmerkmalsvektor, der jeder von der einen oder mehreren Kategorien entspricht, beinhaltet:

Bestimmen eines aktualisierten Positionsmerkmalsvektors des Pixelpunkts basierend auf dem Positionsmerkmalsvektor des Pixelpunkts und dem Referenzpositionsmerkmalsvektor, der jeder von der einen oder mehreren Kategorien entspricht;

Bestimmen von Distanzinformationen des Pixelpunkts basierend auf dem aktualisierten Positionsmerkmalsvektor des Pixelpunkts; wobei die Distanzinformationen eine Distanz zwischen dem Pixelpunkt und einem Begrenzungsrahmen des Pixelpunkts angeben;

Bestimmen der Position des Pixelpunkts basierend auf den Distanzinformationen.

5. Verfahren nach einem der Ansprüche 1-4, wobei der Referenzmerkmalsvektor, der jeder von der einen oder mehreren im Speichermedium gespeicherten Kategorien entspricht, in einem Trainingsprozess des Detektionsmodells erhalten wird und der Trainingsprozess beinhaltet:

Erhalten einer Vielzahl von Musterbildern, die einen ersten Abschnitt und einen zweiten Abschnitt beinhalten, wobei jedes Musterbild im ersten Abschnitt eine oder mehrere Beschriftungen beinhaltet, wobei die Beschriftungen konfiguriert sind, um mindestens eine von einer beschrifteten Kategorien oder einer beschrifteten Position jedes des einen oder mehrerer Musterobjekte in jedem Musterbild im ersten Abschnitt zu charakterisieren;

basierend auf der Vielzahl von Musterbildern Aktualisieren der Parameterwerte eines vorläufigen Detektionsmodells durch mehrere Iterationen, um einen Verlustfunktionswert zu reduzieren, der jedem Musterbild entspricht.

6. Verfahren nach Anspruch 5, wobei eine Anzahl an Musterbildern im ersten Abschnitt geringer ist als eine Anzahl an Musterbildern im zweiten Abschnitt.

7. Verfahren nach Anspruch 5 oder Anspruch 6, wobei der Verlustfunktionswert in einer aktuellen Iteration, die einem Musterbild entspricht, durch Operationen bestimmt wird, die beinhalten:

Extrahieren von Merkmalen des Musterbildes, um einen Mustermerkmalsvektor jedes von dem mindestens einen Musterpixelpunkt zu erhalten;

Erhalten eines Musterreferenzmerkmalsvektors, der jeder von der einen oder mehreren beschrifteten Kategorien entspricht, die in einer Speichereinheit in der aktuellen Iteration zwischengespeichert sind;

Bestimmen eines vorhergesagten Erkennungsergebnisses des Musterpixelpunkts basierend auf dem Musterreferenzmerkmalsvektor und dem Mustermerkmalsvektors des Stichprobenpixelpunkts;

Bestimmen eines vorhergesagten Erkennungsergebnisses jedes von dem einen oder mehreren Musterobjekten basierend auf dem vorhergesagten Erkennungsergebnis des Musterpixelpunkts; und

Bestimmen des Verlustfunktionswertes basierend auf einer Differenz zwischen dem vorhergesagten Erkennungsergebnis des Musterobjekts und den Beschriftungen des Musterbildes.

8. Verfahren nach Anspruch 7, wobei das vorhergesagte Erkennungsergebnis eine vorhergesagte Kategorie und eine vorhergesagte Position umfasst, der Mustermerkmalsvektor einen Musterklassifizierungsmerkmalsvektor und einen Musterpositionsmerkmalsvektor umfasst, der Musterreferenzmerkmalsvektor einen Musterreferenzklassifizierungsmerkmalsvektor, der dem Musterklassifizierungsmerkmalsvektor entspricht, und einen Musterreferenzpositionsmerkmalsvektor, der dem Musterpositionsmerkmalsvektor entspricht, umfasst, wobei das Bestimmen eines vorhergesagten Erkennungsergebnisses des Pixelpunkts basierend auf dem Musterreferenzmerkmalsvektor und dem Mustermerkmalsvektor des Musterpixelpunkts beinhaltet:

Bestimmen der vorhergesagten Kategorie des Musterpixelpunkts basierend auf dem Musterklassifizierungsmerkmalsvektor und dem Musterreferenzklassifizierungsmerkmalsvektor; und

Bestimmen der vorhergesagten Position des Musterpixelpunkts basierend auf dem Mustepositionsmerkmalsvektor und dem Musterreferenzpositionsmerkmalsvektor

9. Verfahren nach Anspruch 7 oder 8, wobei das Erhalten eines Musterreferenzmerkmalsvektors, der jeder von der einen oder mehreren beschrifteten Kategorien entspricht, die in einer Speichereinheit in der aktuellen Iteration zwischengespeichert sind, beinhaltet:

Bestimmen von Musterpixelpunkten verschiedener beschrifteter Kategorien in einem Musterbild, wobei die Musterpixelpunkte eine Bedingung erfüllen;
basierend auf Musterklassifizierungsmerkmalsvektoren der Musterpixel Bestimmen des Musterreferenzklassifizierungsmerkmalsvektors, der mindestens einer von der einen oder mehreren beschrifteten Kategorien in der aktuellen Iteration entspricht, durch Aktualisieren von Musterreferenzklassifizierungsmerkmalsvektoren, die anderen beschrifteten Kategorien in einer vorherigen Iteration der aktuellen Iteration entsprechen;
basierend auf den Musterpositionsmerkmalsvektoren der Musterpixel anderer beschrifteter Kategorien Bestimmen des Musterreferenzpositionsmerkmalsvektors, der mindestens einer von der einen oder mehreren beschrifteten Kategorien in der aktuellen Iteration entspricht, durch Aktualisieren der Musterreferenzpositionsmerkmalsvektoren, die anderen beschrifteten Kategorien in der vorherigen Iteration der aktuellen Iteration entsprechen.

10. Verfahren nach Anspruch 9, wobei die Bedingung beinhaltet, dass ein Überlappungsgrad zwischen einer vorhergesagten Position, die dem Musterpixelpunkt entspricht, und einer beschrifteten Position im Musterbild größer als ein Schwellenwert ist.

11. Verfahren nach Anspruch 9 oder Anspruch 10, weiter beinhaltend:
Bestimmen des Musterreferenzklassifizierungsmerkmalsvektors und des Musterreferenzpositionsmerkmalsvektors, die mindestens einer von der einen oder mehreren in einer Iteration erzeugten beschrifteten Kategorien entsprechen, wenn der Trainingsprozess als Referenzmerkmalsvektor beendet wird, der mindestens einer von der einen oder mehreren Kategorien entspricht.

12. Verfahren nach Anspruch 8, wobei das Bestimmen der vorhergesagten Kategorie des Musterpixelpunkts basierend auf dem Musterklassifizierungsmerkmalsvektor und dem Musterreferenzklassifizierungsmerkmalsvektor beinhaltet:

Bestimmen anfänglicher Musterkategorieinformationen des Musterpixelpunkts basierend auf dem Musterklassifizierungsmerkmalsvektor des Musterpixelpunkts;
Bestimmen eines Musterähnlichkeitsgrades zwischen dem Musterklassifizierungsmerkmalsvektor und dem Musterreferenzklassifizierungsmerkmalsvektor, der jeder von der einen oder mehreren Kategorien entspricht; und
Bestimmen der vorhergesagten Kategorie des Musterpixelpunkts basierend auf den anfänglichen Musterkategorieinformationen und des Musterähnlichkeitsgrades.

13. Verfahren nach Anspruch 8, wobei das Bestimmen der vorhergesagten Position des Musterpixelpunkts basierend auf dem Musterpositionsmerkmalsvektor und dem Musterreferenzpositionsmerkmalsvektor beinhaltet:

Bestimmen eines aktualisierten Musterpositionsmerkmalsvektors des Pixelpunkts basierend auf dem Musterpositionsmerkmalsvektor und dem Musterreferenzpositionsmerkmalsvektor, der jeder von der einen oder mehreren Kategorien entspricht;
Bestimmen von Distanzinformationen des Musterpixelpunkts basierend auf dem aktualisierten Musterpositionsmerkmalsvektor des Musterpixelpunkts; wobei die Musterdistanzinformationen eine Distanz zwischen dem Musterpixelpunkt und einem Begrenzungsrahmen des Musterpixelpunkts angeben;
Bestimmen der vorhergesagten Position des Musterpixelpunkts basierend auf den Musterdistanzinformationen.

14. System, umfassend:

mindestens eine Speichervorrichtung, die einen Satz von Anweisungen einschließt; und
mindestens einen Prozessor in Kommunikation mit der mindestens einen Speichervorrichtung, wobei der mindestens eine Prozessor beim Ausführen des Satzes von Anweisungen angewiesen ist, Operationen durchzuführen, die beinhalten:

Eingeben eines Detektionsbildes in ein Detektionsmodell; und

Erhalten eines Erkennungsergebnisses eines Objekts im Detektionsbild unter Verwendung des Detektionsmodells, wobei das Erkennungsergebnis eine Kategorie und eine Position umfasst, und das Erhalten eines Erkennungsergebnisses eines Objekts im Detektionsbild unter Verwendung des Detektionsmodells beinhaltet:

Extrahieren von Merkmalen des Detektionsbildes, um einen Merkmalsvektor von jedem von mindestens einem Pixelpunkt zu erhalten, wobei der Merkmalsvektor einen Klassifizierungsmerkmalsvektor und einen Positionsmerkmalsvektor umfasst;

Erhalten eines Referenzmerkmalsvektors, der jeder der eine oder mehrere in der Speichervorrichtung gespeicherten Kategorien entspricht, wobei der Referenzmerkmalsvektor einen Referenzklassifizierungsmerkmalsvektor umfasst, der dem Klassifizierungsmerkmalsvektor entspricht, und einen Referenzpositionsmerkmalsvektor, der dem Positionsmerkmalsvektor entspricht;

Bestimmen eines Erkennungsergebnisses des Pixelpunkts basierend auf dem Referenzmerkmalsvektor und dem Merkmalsvektor des Pixelpunkts, das beinhaltet:

Bestimmen der Kategorie des Pixelpunkts basierend auf dem Klassifizierungsmerkmalsvektor des Pixelpunkts und dem Referenzklassifizierungsmerkmalsvektor, der jeder von der einen oder mehreren Kategorien entspricht; und

Bestimmen der Position des Pixelpunkts basierend auf dem Positionsmerkmalsvektor des Pixelpunkts und dem Referenzpositionsmerkmalsvektor, der jeder von der einen oder mehreren Kategorien entspricht; und

Bestimmen eines Erkennungsergebnisses des Objekts basierend auf dem Erkennungsergebnis des Pixelpunkts.

15. Nichtflüchtiges, computerlesbares Medium, das ausführbare Anweisungen umfasst, die, wenn sie von mindestens einem Prozessor ausgeführt werden, den mindestens einen Prozessor anweisen, ein Verfahren durchzuführen, wobei das Verfahren umfasst:

Eingeben eines Detektionsbildes in ein Detektionsmodell; und

Erhalten eines Erkennungsergebnisses eines Objekts im Detektionsbild unter Verwendung des Detektionsmodells, wobei das Erkennungsergebnis eine Kategorie und eine Position umfasst, und das Erhalten eines Erkennungsergebnisses eines Objekts im Detektionsbild unter Verwendung des Detektionsmodells beinhaltet:

Extrahieren von Merkmalen des Detektionsbildes, um einen Merkmalsvektor von jedem von mindestens einem Pixelpunkt zu erhalten, wobei der Merkmalsvektor einen Klassifizierungsmerkmalsvektor und einen Positionsmerkmalsvektor umfasst;

Erhalten eines Referenzmerkmalsvektors, der jeder der eine oder mehrere in der Speichervorrichtung gespeicherten Kategorien entspricht, wobei der Referenzmerkmalsvektor einen Referenzklassifizierungsmerkmalsvektor umfasst, der dem Klassifizierungsmerkmalsvektor entspricht, und einen Referenzpositionsmerkmalsvektor, der dem Positionsmerkmalsvektor entspricht;

Bestimmen eines Erkennungsergebnisses des Pixelpunkts basierend auf dem Referenzmerkmalsvektor und dem Merkmalsvektor des Pixelpunkts, das beinhaltet:

Bestimmen der Kategorie des Pixelpunkts basierend auf dem Klassifizierungsmerkmalsvektor des Pixelpunkts und dem Referenzklassifizierungsmerkmalsvektor, der jeder von der einen oder mehreren Kategorien entspricht; und

Bestimmen der Position des Pixelpunkts basierend auf dem Positionsmerkmalsvektor des Pixelpunkts und dem Referenzpositionsmerkmalsvektor, der jeder von der einen oder mehreren Kategorien entspricht; und

Bestimmen eines Erkennungsergebnisses des Objekts basierend auf dem Erkennungsergebnis des Pixelpunkts.

## Revendications

1. Procédé mis en œuvre sur un dispositif informatique, le dispositif informatique incluant un processeur et un dispositif de stockage, le procédé incluant :

la saisie d'une image de détection dans un modèle de détection ; et

l'obtention d'un résultat de reconnaissance d'un objet dans l'image de détection à l'aide du modèle de détection, dans lequel le résultat de reconnaissance comprend une catégorie et une position, et l'obtention d'un résultat de reconnaissance d'un objet dans l'image de détection à l'aide du modèle de détection inclut :

l'extraction de caractéristiques de l'image de détection pour obtenir un vecteur de caractéristique de chacun d'au moins un point de pixel, dans lequel le vecteur de caractéristique comprend un vecteur de caractéristique de classification et un vecteur de caractéristique de position ;

l'obtention d'un vecteur de caractéristique de référence correspondant à chacune d'une ou plusieurs catégories stockées dans le dispositif de stockage, dans lequel le vecteur de caractéristique de référence comprend un vecteur de caractéristique de classification de référence correspondant au vecteur de caractéristique de classification et un vecteur de caractéristique de position de référence correspondant au vecteur de caractéristique de position ;

la détermination, sur la base du vecteur de caractéristique de référence et du vecteur de caractéristique du point de pixel, d'un résultat de reconnaissance du point de pixel, incluant :

la détermination de la catégorie du point de pixel sur la base du vecteur de caractéristique de classification du point de pixel et du vecteur de caractéristique de classification de référence correspondant à chacune des une ou plusieurs catégories ; et

la détermination de la position du point de pixel sur la base du vecteur de caractéristique de position du point de pixel et du vecteur de caractéristique de position de référence correspondant à chacune des une ou plusieurs catégories ; et

la détermination, sur la base du résultat de reconnaissance du point de pixel, d'un résultat de reconnaissance de l'objet.

2. Procédé selon la revendication 1, dans lequel le procédé inclut en outre :

la détermination d'un degré de centralité de l'objet sur la base des caractéristiques de boîte de l'objet ;

la détermination, sur la base du degré de centralité, d'un premier niveau de confiance de classification ;

la détermination, sur la base de caractéristiques de mémoire tampon de catégorie préenregistrée, de caractéristiques de catégorie de l'objet, et du premier niveau de confiance de classification, d'un second niveau de confiance de classification ; et

la détermination, sur la base du second niveau de confiance de classification, d'une catégorie de l'objet.

3. Procédé selon la revendication 1, dans lequel la détermination de la catégorie du point de pixel sur la base du vecteur de caractéristique de classification du point de pixel et du vecteur de caractéristique de classification de référence correspondant à chacune des une ou plusieurs catégories inclut :

la détermination d'informations de catégorie initiales du point de pixel sur la base du vecteur de caractéristique de classification du point de pixel ;

la détermination d'un degré de similarité entre le vecteur de caractéristique de classification du point de pixel et le vecteur de caractéristique de classification de référence correspondant à chacune des une ou plusieurs catégories ; et

la détermination de la catégorie du point de pixel sur la base des informations de catégorie initiales et du degré de similarité.

4. Procédé selon la revendication 1 ou la revendication 3, dans lequel la détermination de la position du point de pixel sur la base du vecteur de caractéristique de position du point de pixel et du vecteur de caractéristique de position de référence correspondant à chacune des une ou plusieurs catégories inclut :

la détermination d'un vecteur de caractéristique de position mis à jour du point de pixel sur la base du vecteur de caractéristique de position du point de pixel et du vecteur de caractéristique de position de référence correspondant à chacune des une ou plusieurs catégories ;

la détermination d'informations de distance du point de pixel sur la base du vecteur de caractéristique de position mis à jour du point de pixel ; les informations de distance indiquant une distance entre le point de pixel et une boîte englobante du point de pixel ;

la détermination de la position du point de pixel sur la base des informations de distance.

**5.** Procédé selon l'une quelconque des revendication 1-4, dans lequel le vecteur de caractéristique de référence correspondant à chacune des une ou plusieurs catégories stockées dans le dispositif de stockage est obtenu lors d'un processus d'apprentissage du modèle de détection, et le processus d'apprentissage inclut :

l'obtention d'une pluralité d'images d'échantillon incluant une première partie et une seconde partie, chaque image d'échantillon de la première partie incluant une ou plusieurs étiquettes, dans lequel les étiquettes sont configurées pour caractériser au moins l'un parmi une catégorie étiquetée ou une position étiquetée de chacun des un ou plusieurs objets d'échantillon dans chaque image d'échantillon de la première partie ;
sur la base de la pluralité d'images d'échantillon, la mise à jour de valeurs de paramètre d'un modèle de détection préliminaire par de multiples itérations afin de réduire une valeur de fonction de perte correspondant à chaque image d'échantillon.

**6.** Procédé selon la revendication 5, dans lequel le nombre d'images d'échantillon dans la première partie est inférieur au nombre d'images d'échantillon dans la seconde partie.

**7.** Procédé selon la revendication 5 ou la revendication 6, dans lequel la valeur de fonction de perte dans une itération actuelle correspondant à une image d'échantillon est déterminée par des opérations incluant :

l'extraction de caractéristiques de l'image d'échantillon afin d'obtenir un vecteur de caractéristique d'échantillon de chacun d'au moins un point de pixel d'échantillon ;
l'obtention d'un vecteur de caractéristique de référence d'échantillon correspondant à chacune d'une ou plusieurs catégories étiquetées mises en cache dans une unité de stockage dans une itération actuelle ;
la détermination d'un résultat de reconnaissance prédit du point de pixel d'échantillon sur la base du vecteur de caractéristique de référence d'échantillon et du vecteur de caractéristique d'échantillon du point de pixel d'échantillon ;
la détermination d'un résultat de reconnaissance prédit de chacun des un ou plusieurs objets d'échantillon sur la base du résultat de reconnaissance prédit du point pixel d'échantillon ; et
la détermination de la valeur de fonction de perte sur la base de la différence entre le résultat de reconnaissance prédit de l'objet d'échantillon et les étiquettes de l'image d'échantillon.

**8.** Procédé selon la revendication 7, dans lequel le résultat de reconnaissance prédit comprend une catégorie prédite et une position prédite, le vecteur de caractéristique d'échantillon comprend un vecteur de caractéristique de classification d'échantillon et un vecteur de caractéristique de position d'échantillon, le vecteur de caractéristique de référence d'échantillon comprend un vecteur de caractéristique de classification de référence d'échantillon correspondant au vecteur de caractéristique de classification d'échantillon et un vecteur de caractéristique de position de référence d'échantillon correspondant au vecteur de caractéristique de position d'échantillon, la détermination d'un résultat de reconnaissance prédit du point de pixel sur la base du vecteur de caractéristique de référence d'échantillon et du vecteur de caractéristique d'échantillon du point de pixel d'échantillon inclut :

la détermination de la catégorie prédite du point de pixel d'échantillon sur la base du vecteur de caractéristique de classification d'échantillon et du vecteur de caractéristique de classification de référence d'échantillon ; et
la détermination de la position prédite du point de pixel d'échantillon sur la base du vecteur de caractéristique de position d'échantillon et du vecteur de caractéristique de position de référence d'échantillon.

**9.** Procédé selon la revendication 7 ou la revendication 8, dans lequel l'obtention d'un vecteur de caractéristique de référence d'échantillon correspondant à chacune d'une ou plusieurs catégories étiquetées mises en cache dans une unité de stockage dans l'itération actuelle inclut :

la détermination de points de pixels d'échantillon de différentes catégories étiquetées dans une image d'échantillon, les points de pixels d'échantillon satisfaisant à une condition ;
sur la base de vecteurs de caractéristique de classification d'échantillon des pixels d'échantillon, la détermination du vecteur de caractéristique de classification de référence d'échantillon correspondant à au moins l'une des une ou plusieurs catégories étiquetées dans l'itération actuelle en mettant à jour des vecteurs de caractéristique de classification de référence d'échantillon correspondant à différentes catégories étiquetées dans une itération précédente de l'itération actuelle ;
sur la base des vecteurs de caractéristique de position d'échantillon des pixels d'échantillon de différentes catégories étiquetées, la détermination du vecteur de caractéristique de position de référence d'échantillon correspondant à au moins l'une des une ou plusieurs catégories étiquetées dans l'itération actuelle en mettant à

34

jour les vecteurs de caractéristique de position de référence d'échantillon correspondant à différentes catégories étiquetées dans l'itération précédente de l'itération actuelle.

10. Procédé selon la revendication 9, dans lequel la condition inclut le fait qu'un degré de chevauchement entre une position prédite correspondant au point de pixel d'échantillon et une position étiquetée dans l'image d'échantillon est supérieur à un seuil.

11. Procédé selon la revendication 9 ou la revendication 10, incluant en outre :
la détermination du vecteur de caractéristique de classification de référence d'échantillon et du vecteur de caractéristique de position de référence d'échantillon correspondant à au moins l'une des une ou plusieurs catégories étiquetées générées dans une itération lorsque le processus d'apprentissage est terminé comme vecteur de caractéristique de référence correspondant à au moins l'une des une ou plusieurs catégories.

12. Procédé selon la revendication 8, dans lequel la détermination de la catégorie prédite du point de pixel d'échantillon sur la base du vecteur de caractéristique de classification d'échantillon et du vecteur de caractéristique de classification de référence d'échantillon inclut :

la détermination d'informations de catégorie initiales d'échantillon du point de pixel d'échantillon sur la base du vecteur de caractéristique de classification d'échantillon du point de pixel d'échantillon ;
la détermination d'un degré de similarité d'échantillon entre le vecteur de caractéristique de classification d'échantillon et le vecteur de caractéristique de classification de référence d'échantillon correspondant à chacune des une ou plusieurs catégories ; et
la détermination de la catégorie prédite du point de pixel d'échantillon sur la base des informations de catégorie initiales d'échantillon et du degré de similarité d'échantillon.

13. Procédé selon la revendication 8, dans lequel la détermination de la position prédite du point de pixel d'échantillon sur la base du vecteur de caractéristique de position d'échantillon et du vecteur de caractéristique de position de référence d'échantillon inclut :

la détermination d'un vecteur de caractéristique de position mis à jour d'échantillon du point de pixel d'échantillon sur la base du vecteur de caractéristique de position d'échantillon et du vecteur de caractéristique de position de référence d'échantillon correspondant à chacune des une ou plusieurs catégories ;
la détermination d'informations de distance du point de pixel d'échantillon sur la base du vecteur de caractéristique de position mis à jour d'échantillon du point de pixel d'échantillon ; les informations de distance d'échantillon indiquant une distance entre le point de pixel d'échantillon et une boîte englobante du point de pixel d'échantillon ;
la détermination de la position prédite du point de pixel d'échantillon sur la base des informations de distance d'échantillon.

14. Système, comprenant :

au moins un dispositif de stockage incluant un ensemble d'instructions ; et
au moins un processeur en communication avec le au moins un dispositif de stockage, dans lequel, lors de l'exécution de l'ensemble d'instructions, le au moins un processeur est amené à effectuer les opérations incluant :

la saisie d'une image de détection dans un modèle de détection ; et
l'obtention d'un résultat de reconnaissance d'un objet dans l'image de détection à l'aide du modèle de détection, dans lequel le résultat de reconnaissance comprend une catégorie et une position, et l'obtention d'un résultat de reconnaissance d'un objet dans l'image de détection à l'aide du modèle de détection inclut :

l'extraction de caractéristiques de l'image de détection pour obtenir un vecteur de caractéristique de chacun d'au moins un point de pixel, dans lequel le vecteur de caractéristique comprend un vecteur de caractéristique de classification et un vecteur de caractéristique de position ;
l'obtention d'un vecteur de caractéristique de référence correspondant à chacune d'une ou plusieurs catégories stockées dans le dispositif de stockage, dans lequel le vecteur de caractéristique de référence comprend un vecteur de caractéristique de classification de référence correspondant au vecteur de caractéristique de classification et un vecteur de caractéristique de position de référence correspondant au vecteur de caractéristique de position ;

la détermination, sur la base du vecteur de caractéristique de référence et du vecteur de caractéristique du point de pixel, d'un résultat de reconnaissance du point de pixel, incluant :

la détermination de la catégorie du point de pixel sur la base du vecteur de caractéristique de classification du point de pixel et du vecteur de caractéristique de classification de référence correspondant à chacune des une ou plusieurs catégories ; et
la détermination de la position du point de pixel sur la base du vecteur de caractéristique de position du point de pixel et du vecteur de caractéristique de position de référence correspondant à chacune des une ou plusieurs catégories ; et

la détermination, sur la base du résultat de reconnaissance du point de pixel, d'un résultat de reconnaissance de l'objet.

15. Support non transitoire lisible par ordinateur, comprenant des instructions exécutables qui, lorsqu'elles sont exécutées par au moins un processeur, amènent le au moins un processeur à exécuter un procédé, le procédé comprenant :

la saisie d'une image de détection dans un modèle de détection ; et
l'obtention d'un résultat de reconnaissance d'un objet dans l'image de détection à l'aide du modèle de détection, dans lequel le résultat de reconnaissance comprend une catégorie et une position, et l'obtention d'un résultat de reconnaissance d'un objet dans l'image de détection à l'aide du modèle de détection inclut :

l'extraction de caractéristiques de l'image de détection pour obtenir un vecteur de caractéristique de chacun d'au moins un point de pixel, dans lequel le vecteur de caractéristique comprend un vecteur de caractéristique de classification et un vecteur de caractéristique de position ;
l'obtention d'un vecteur de caractéristique de référence correspondant à chacune d'une ou plusieurs catégories stockées dans le dispositif de stockage, dans lequel le vecteur de caractéristique de référence comprend un vecteur de caractéristique de classification de référence correspondant au vecteur de caractéristique de classification et un vecteur de caractéristique de position de référence correspondant au vecteur de caractéristique de position ;
la détermination, sur la base du vecteur de caractéristique de référence et du vecteur de caractéristique du point de pixel, d'un résultat de reconnaissance du point de pixel, incluant :
la détermination de la catégorie du point de pixel sur la base du vecteur de caractéristique de classification du point de pixel et du vecteur de caractéristique de classification de référence correspondant à chacune des une ou plusieurs catégories ; et
la détermination de la position du point de pixel sur la base du vecteur de caractéristique de position du point de pixel et du vecteur de caractéristique de position de référence correspondant à chacune des une ou plusieurs catégories ; et
la détermination, sur la base du résultat de reconnaissance du point de pixel, d'un résultat de reconnaissance de l'objet.

**FIG. 1**

**200**

FIG. 2

300

FIG. 3

**112**

402

Feature Extraction
Module

404

Acquisition module

406

Recognition Module

408

Storage Module

## FIG. 4A

**112**

401

Acquisition Module

403

Parameter Adjustment
Module

405

Storage Module

## FIG. 4B

500

Extracting features from one or more detection images to obtain one or more feature vectors of at least one pixel point ⟋510

Obtaining one or more reference feature vectors corresponding to each of at least one category in a storage unit ⟋520

Determining a recognition result of the at least one pixel point based on the one or more reference feature vectors and the one or more feature vectors of the at least one pixel point using a detection model ⟋530

Determining a recognition result of the at least one target based on the recognition result of the at least one pixel point ⟋540

**FIG. 5**

CF-buffer

BR-buffer

FIG. 6

**700**

Determining a category of a pixel point in a feature image based on a classification feature vector of the pixel point and a reference classification feature vector corresponding to each of one or more categories ⟋710

Determining the position of the pixel point based on a position feature vector of the pixel point and a reference position feature vector corresponding to each of the one or more categories ⟋720

**FIG. 7**

**800**

Obtaining a plurality of sample images — 810

Based on the plurality of sample images, obtain a detection model by updating parameter values of a preliminary detection model through multiple iterations to reduce a loss function value corresponding to each sample image — 820

**FIG. 8**

<u>900</u>

```
┌─────────────────────────────────────────────────────┐
│ Extracting features of an inputted sample image to    │        910
│ obtain a sample feature vector of each of at least    │
│ one sample pixel point in a sample feature image in   │
│ a current iteration                                   │
└─────────────────────────────────────────────────────┘
                           │
                           ▼
┌─────────────────────────────────────────────────────┐
│ Obtaining a sample reference feature vector of each   │        920
│ of at least one labeled category cached in a storage  │
│ unit in a current iteration                           │
└─────────────────────────────────────────────────────┘
                           │
                           ▼
┌─────────────────────────────────────────────────────┐
│ Determining a predicted recognition result of the at  │        930
│ least one sample pixel point based on the sample      │
│ reference feature vector and the sample feature       │
│ vector of the at least one pixel point                │
└─────────────────────────────────────────────────────┘
                           │
                           ▼
┌─────────────────────────────────────────────────────┐
│ Determining a predicted recognition result of the at  │        940
│ least one sample object based on the predicted        │
│ recognition result of the at least one sample pixel   │
│ point                                                 │
└─────────────────────────────────────────────────────┘
```

FIG. 9

<u>**1000**</u>

Determining the predicted a category of a sample pixel point in a sample image based on a sample classification feature vector of the sample pixel point and a sample reference classification feature vector corresponding to each of one or more labeled categories

1010

↓

Determining the predicted position of the sample pixel point based on a sample position feature vector of the sample pixel point and a sample reference position feature vector corresponding to each of the one or more labeled categories

1020

**FIG. 10**

**1100**

Determining multiple target sample pixel points in a sample feature image that satisfy a preset condition — 1110

1120

Based on sample classification feature vectors of the target sample pixel points corresponding to different labeled categories in the current iteration, determine the sample reference classification feature vector corresponding to the at least one labeled category in the current iteration by updating the sample reference classification feature vector corresponding to different labeled categories generated and used in a previous iteration and cached in a storage unit

1130

Based on sample position feature vectors of the target sample pixel points corresponding to different labeled categories in the current iteration, determine the sample reference position feature vector corresponding to the at least one labeled category in the current iteration by updating the sample reference position feature vectors corresponding to different labeled categories generated and used in a previous iteration and cached in a storage unit

**FIG. 11**

**1200**

Obtaining one or more detection images, and obtain bounding box features   of an object in each of the detection images — 1202

Determine a box buffer feature corresponding to the category of the target from pre-stored box buffer features — 1204

Determining the position and size of the box of the target based on the box feature and the box buffer feature of the target — 1206

**FIG. 12**

CF $-$ buffer$'$          BR $-$ buffer$'$

**FIG. 13**

**1400**

Obtaining a plurality of sample images, input the plurality of sample images to a preset neural network, and obtain a prediction point of the sample — 1402

Obtaining box features based on the prediction point and the real target box — 1404

For the plurality of sample images, updating the box features to obtain box buffer features — S23

**FIG. 14**

<u>1500</u>

Determining the centrality degree of an object based on the box features of the object — 1502

Obtaining a first classification confidence level based on the centrality degree — S32

Determining a second classification confidence level based on the pre-stored category buffer features, the category features of the object, and the first classification confidence level of the object — S33

**FIG. 15**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011285823